# EUROPEAN PATENT SPECIFICATION

(11) **EP 4 564 971 B1**
(45) Date of publication and mention of the grant of the patent: **25.11.2026**
(21) Application number: 23859494.9
(22) Date of filing: 01.09.2023
(51) Int. Cl.: H04W 72/04, H02J 50/20

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 02.09.2022 CN 202211068592; 31.08.2023 CN 202311121076
(43) Date of publication of application: 04.06.2025
(73) Proprietor: Huawei Technologies Co., Ltd., Shenzhen, Guangdong 518129 (CN)
(72) Inventor: WU, Yiling, Shenzhen, Guangdong 518129 (CN); LU, Zhenwei, Shenzhen, Guangdong 518129 (CN); YANG, Liu, Shenzhen, Guangdong 518129 (CN); CHEN, Jun, Shenzhen, Guangdong 518129 (CN)
(74) Representative: Gill Jennings & Every LLP
(86) International application number: PCT/CN2023/116506
(87) International publication number: WO 2024/046467

(56) References cited:
- WO-A1-2022/170267
- CN-A- 1 805 314
- CN-A- 108 809 564
- CN-A- 113 573 409
- KR-B1- 101 531 394
- US-A1- 2019 320 444
- US-A1- 2020 226 331
- US-A1- 2021 004 544

## Description

### TECHNICAL FIELD

This application relates to the communication field, and more specifically, to a communication method and apparatus in the communication field.

### BACKGROUND

With rapid development of internet of things (Internet of things, IoT) technologies, interconnection of all things gradually becomes a reality. However, a battery life problem of IoT terminal devices results in a great increase in maintenance difficulty and maintenance costs of the terminal devices, and becomes a major bottleneck restricting IoT development. Therefore, IoT terminal devices that do not depend on batteries for power supply are an important evolution trend of a next-generation IoT. A passive internet of things (passive IoT) is a cellular internet of things communication technology that supports battery-free terminals.

Usually, in an internet of things system, IoT terminal devices may be classified into an active tag (active tag), a passive tag (passive tag), and a semi-passive tag (semi-passive tag) based on different power supply modes of the IoT terminal devices. The active tag includes a built-in battery. The semi-passive tag partially depends on a battery to work. The passive tag includes no built-in battery, and may rectify a radio frequency signal from another device, and use a direct current voltage output through rectification as a power supply to supply energy.

In the passive internet of things, communication between a base station and a passive tag is usually implemented by using a backscatter communication mechanism. A widely used ultra-high frequency (ultra-high frequency, UHF) radio frequency identification (Radio Frequency Identification, RFID) system is one that relates to the backscatter communication mechanism. The base station sends a downlink radio frequency signal to the tag by using a frequency band of an industrial, scientific, and medical (industrial, scientific, and medical, ISM) spectrum dedicated to the typical passive UHF RFID system. The tag receives the downlink radio frequency signal sent by the base station, and sends an uplink signal to the base station by using a backscatter technology. However, in the UHF RFID system, equivalent isotropically radiated power (equivalent isotropically radiated power, EIRP) of the radio frequency signal delivered by the base station is constrained not to exceed 36 decibel-milliwatts (dBm). Consequently, a coverage radius of the base station does not exceed 15 meters and a spacing between base stations is only 21 meters. In this case, requirements of some application scenarios that require a large coverage area in a cellular passive internet of things system cannot be met.

WO 2022/170267 A1 relates to systems, methods and devices for wireless transmissions based on backscattering. US 2021/004544 A1 relates to a radio frequency identification system, a method for constructing a relay network, a reader and a repeater.

### SUMMARY

Embodiments of this application provide a communication method and a communication apparatus, to increase a coverage area of a network device in an IoT system.

According to a first aspect, a communication method is provided. The method includes: A network device sends a first signal to a first device on a first frequency band, where the first frequency band includes a downlink frequency band of a licensed frequency division duplex FDD spectrum, and the first signal is used to supply energy to the first device; and the network device receives a second signal from the first device on a second frequency band or a third frequency band, where the second signal includes uplink data, the second frequency band includes an uplink frequency band of the licensed frequency division duplex FDD spectrum, and the third frequency band includes a frequency band of an unlicensed spectrum.

Specifically, the frequency band of the unlicensed spectrum may be a frequency band of an industrial, scientific, and medical (industrial, scientific, and medical, ISM) spectrum.

Specifically, a frequency range of the first frequency band, a frequency range of the second frequency band, and a frequency range of the third frequency band may be specified in a protocol.

Specifically, the first device may be a battery-free terminal device.

It should be understood that the first device may receive a downlink signal, send uplink data, and/or the like by using energy supplied by the first signal.

The network device may be allowed to send an energy supply signal with higher power on the downlink frequency band of licensed FDD. Therefore, a coverage area of the network device can be expanded. In addition, the network device may not only receive, on the uplink frequency band of licensed FDD, an uplink signal sent by the first device, but also receive, on the frequency band of the unlicensed spectrum, an uplink signal sent by the first device, thereby improving flexibility of frequency domain resource allocation.

With reference to the first aspect, in some implementations of the first aspect, that a network device sends a first signal to a first device on a first frequency band includes: The network device sends the first signal to the first device in a first time period of the first frequency band and the second frequency band, or the network device sends the first signal to the first device in a second time period of the first frequency band and the third frequency band.

The first time period and the second time period may be predefined time periods. The time period may alternatively be a time unit or the like. This is not limited in this application.

The network device may send an energy supply signal with higher power on both the downlink frequency band of licensed FDD and another frequency band, to further expand the coverage area of the network device.

With reference to the first aspect, in some implementations of the first aspect, if the network device receives, on the second frequency band, the second signal sent by the first device, the method further includes: The network device sends first indication information to a second device, where the first indication information indicates the second device to send a first carrier signal to the first device on the second frequency band, and the first carrier signal is used by the first device to send the second signal to the network device.

Specifically, the second device may be customer premises equipment (customer premises equipment, CPE), customer premises equipment, customer premises equipment, or user equipment (user equipment, UE). This is not limited in this application.

Specifically, the network device may receive the second signal sent by the first device through backscattering.

Specifically, that the first carrier signal is used by the first device to send the second signal to the network device may be as follows: The first carrier signal carries uplink data and is sent as the second signal, or a new carrier signal generated based on the first carrier signal carries uplink data and is sent as the second signal. This is not limited in this application.

In addition, the first device may alternatively generate a new carrier signal based on the first carrier signal, and use the new carrier signal to send the second signal. Whether the first device directly uses the first carrier signal to send the second signal or the first device uses the new carrier signal generated based on the first carrier signal to send the second signal falls within the protection scope of this application.

The first device cannot support frequency shifting within a specific range when sending an uplink signal in an FDD system. For example, the first device may receive the first signal, the following third signal, and the like on the downlink frequency band of FDD, but cannot support sending of the second signal on the uplink frequency band of FDD. A problem that the first device does not support frequency shifting when transmitting uplink data in the FDD system can be resolved by using the method for indicating, by the network device, another auxiliary device to send a carrier signal to the first device on the uplink frequency band of FDD.

With reference to the first aspect, in some implementations of the first aspect, that the network device receives a second signal from the first device on a second frequency band or a third frequency band includes: The network device sends second indication information to a third device, where the second indication information indicates the third device to send a third carrier signal to the first device on the second frequency band or the third frequency band, and the third carrier signal is used by the first device to send the second signal to the network device; and the network device receives the second signal from the first device on the second frequency band or the third frequency band.

Specifically, the third device may be a relay node. For example, the third device may be a handheld terminal. This is not limited in this application.

Specifically, the network device may receive the second signal sent by the first device through backscattering.

Specifically, that the third carrier signal is used by the first device to send the second signal to the network device may be as follows: The third carrier signal carries uplink data and is sent as the second signal, or a new carrier signal generated based on the third carrier signal carries uplink data and is sent as the second signal. This is not limited in this application.

In addition, the first device may alternatively generate a new carrier signal based on the third carrier signal, and use the new carrier signal to send the second signal. Whether the first device directly uses the third carrier signal to send the second signal or the first device uses the new carrier signal generated based on the third carrier signal to send the second signal falls within the protection scope of this application.

The first device cannot support frequency shifting within a specific range when sending an uplink signal in an FDD system. For example, the first device may receive the first signal, the following third signal, and the like on the downlink frequency band of FDD, but cannot support sending of the second signal on the uplink frequency band of FDD. A problem that the first device does not support frequency shifting when transmitting uplink data in the FDD system can be resolved by using the method for indicating, by the network device, another auxiliary device to send a carrier signal to the first device on the uplink frequency band of FDD.

With reference to the first aspect, in some implementations of the first aspect, the first indication information includes at least one of a start moment for sending the first carrier signal, duration for sending the first carrier signal, and power for sending the first carrier signal.

As an example instead of a limitation, the first indication information may directly include fields indicating the start moment, the duration, the sending power, and the like for sending the first carrier signal. The first indication information may alternatively include other fields to indirectly indicate the start moment, the duration, the sending power, and the like for sending the first carrier signal.

The first indication information includes the foregoing information, so that sending of the first carrier signal can be accurately controlled.

With reference to the first aspect, in some implementations of the first aspect, the second indication information includes at least one of a start moment for sending the third carrier signal, duration for sending the third carrier signal, and power for sending the third carrier signal.

As an example instead of a limitation, the second indication information may directly include fields indicating the start moment, the duration, the sending power, and the like for sending the third carrier signal. The second indication information may alternatively include other fields to indirectly indicate the start moment, the duration, the sending power, and the like for sending the third carrier signal.

The second indication information includes the foregoing information, so that sending of the third carrier signal can be accurately controlled.

With reference to the first aspect, in some implementations of the first aspect, if the network device receives, on the second frequency band, the second signal sent by the first device, the method further includes: The network device sends a second carrier signal to the first device on the second frequency band, where the second carrier signal is used by the first device to send the second signal to the network device, and power of the second carrier signal sent by the network device is less than power of the first signal sent by the network device.

It should be understood that the network device may send the second carrier signal to the first device on the uplink frequency band of FDD, and the network device may further simultaneously receive the second signal from the first device on the uplink frequency band of FDD.

Specifically, the network device may receive the second signal sent by the first device through backscattering.

Specifically, that the second carrier signal is used by the first device to send the second signal to the network device may be as follows: The second carrier signal carries uplink data and is sent as the second signal, or a new carrier signal generated based on the second carrier signal carries uplink data and is sent as the second signal, or the like. This is not limited in this application.

In addition, the first device may alternatively generate a new carrier signal based on the second carrier signal, and use the new carrier signal to send the second signal. Whether the first device directly uses the second carrier signal to send the second signal or the first device uses the new carrier signal generated based on the second carrier signal to send the second signal falls within the protection scope of this application.

In addition, the power of the second carrier signal sent by the network device may be less than the power of the first signal sent by the network device, or may be less than power of another downlink signal sent by the network device to the first device.

According to the foregoing method, the network device may send the second carrier signal to the first device on the uplink frequency band of FDD, but the power of the second carrier signal needs to be less than power of an energy supply signal (for example, the first signal) or the power of the second carrier signal needs to be less than power of another downlink signal. This reduces blocking interference on a network device side, and can avoid a modification that needs to be made to hardware due to interference cancellation or interference suppression.

With reference to the first aspect, in some implementations of the first aspect, if the network device receives, on the third frequency band, the second signal sent by the first device, the method further includes: The network device sends a second carrier signal to the first device on the third frequency band, where the second carrier signal is used by the first device to send the second signal to the network device.

Specifically, the network device may receive the second signal sent by the first device through backscattering.

Specifically, that the second carrier signal is used by the first device to send the second signal to the network device may be as follows: The second carrier signal carries uplink data and is sent as the second signal, or a new carrier signal generated based on the second carrier signal carries uplink data and is sent as the second signal, or the like. This is not limited in this application.

In addition, the first device may alternatively generate a new carrier signal based on the second carrier signal, and use the new carrier signal to send the second signal. Whether the first device directly uses the second carrier signal to send the second signal or the first device uses the new carrier signal generated based on the second carrier signal to send the second signal falls within the protection scope of this application.

A problem that the first device does not support frequency shifting when transmitting uplink data in an FDD system can be resolved by using the foregoing method for sending, by the network device, a carrier signal to the first device on an unlicensed frequency band with a power limitation.

With reference to the first aspect, in some implementations of the first aspect, the method further includes: The network device sends a third signal to the first device on the first frequency band or the third frequency band, where the third signal is used to request the first device to send the second signal.

The network device may not only send a signal to the first device on the first frequency band, but also send a signal to the first device on the third frequency band, to improve flexibility of sending a signal and achieve high communication efficiency. In addition, the network device may select the first frequency band to send a signal with a high transmit power requirement, and may further select the third frequency band to send a signal with a low transmit frequency requirement, to properly allocate frequency domain resources.

According to a second aspect, a communication method is provided. The method includes: A first device receives a first signal from a network device on a first frequency band, where the first frequency band includes a downlink frequency band of a licensed frequency division duplex FDD spectrum, and the first signal is used to supply energy to the first device; and the first device sends a second signal to the network device on a second frequency band or a third frequency band, where the second signal includes uplink data, the second frequency band includes an uplink frequency band of the licensed frequency division duplex FDD spectrum, and the third frequency band includes a frequency band of an unlicensed spectrum.

Specifically, the frequency band of the unlicensed spectrum may be a frequency band of an ISM spectrum.

Specifically, a frequency range of the first frequency band, a frequency range of the second frequency band, and a frequency range of the third frequency band may be specified in a protocol.

Specifically, the first device may be a battery-free terminal device.

It should be understood that the first device may receive a downlink signal, send uplink data, and/or the like by using energy supplied by the first signal.

The first device may be allowed to receive an energy supply signal with higher power from the network device on the downlink frequency band of licensed FDD. Therefore, a coverage area of the network device can be expanded. In addition, the first device may not only send an uplink signal to the network device on the uplink frequency band of licensed FDD, but also send an uplink signal to the network device on the frequency band of the unlicensed spectrum, thereby improving flexibility of frequency domain resource allocation.

With reference to the second aspect, in some implementations of the second aspect, that a first device receives a first signal from a network device on a first frequency band includes: The first device receives the first signal from the network device in a first time period of the first frequency band and the second frequency band, or the first device receives the first signal from the network device in a second time period of the first frequency band and the third frequency band.

The first time period and the second time period may be predefined time periods. The time period may alternatively be a time unit or the like. This is not limited in this application.

The first device may receive an energy supply signal with higher power from the network device on both the downlink frequency band of licensed FDD and another frequency band. Therefore, the coverage area of the network device can be expanded.

With reference to the second aspect, in some implementations of the second aspect, if the first device sends the second signal to the network device on the second frequency band, the method further includes: The first device receives a first carrier signal from a second device on the second frequency band, where the first carrier signal is used by the first device to send the second signal to the network device.

Specifically, the second device may be customer premises equipment (customer premises equipment, CPE), customer premises equipment, customer premises equipment, or user equipment (user equipment, UE). This is not limited in this application.

Specifically, the first device may send the second signal to the network device through backscattering.

Specifically, that the first carrier signal is used by the first device to send the second signal to the network device may be as follows: The first carrier signal carries uplink data and is sent as the second signal, or a new carrier signal generated based on the first carrier signal carries uplink data and is sent as the second signal, or the like. This is not limited in this application.

In addition, the first device may alternatively generate a new carrier signal based on the first carrier signal, and use the new carrier signal to send the second signal. Whether the first device directly uses the first carrier signal to send the second signal or the first device uses the new carrier signal generated based on the first carrier signal to send the second signal falls within the protection scope of this application.

The first device cannot support frequency shifting within a specific range when sending an uplink signal in an FDD system. For example, the first device may receive the first signal, the following third signal, and the like on the downlink frequency band of FDD, but cannot support sending of the second signal on the uplink frequency band of FDD. A problem that the first device does not support frequency shifting when transmitting uplink data in the FDD system can be resolved by using the method for indicating, by the network device, another auxiliary device to send a carrier signal to the first device on the uplink frequency band of FDD.

With reference to the second aspect, in some implementations of the second aspect, the method further includes: The first device receives a third carrier signal from a third device on the second frequency band or the third frequency band, where the third carrier signal is used by the first device to send the second signal to the network device on the second frequency band or the third frequency band.

Specifically, the third device may be a relay node. For example, the third device may be a handheld terminal. This is not limited in this application.

Specifically, the first device may send the second signal to the network device through backscattering.

Specifically, that the third carrier signal is used by the first device to send the second signal to the network device may be as follows: The third carrier signal carries uplink data and is sent as the second signal, or a new carrier signal generated based on the third carrier signal carries uplink data and is sent as the second signal, or the like. This is not limited in this application.

In addition, the first device may alternatively generate a new carrier signal based on the third carrier signal, and use the new carrier signal to send the second signal. Whether the first device directly uses the third carrier signal to send the second signal or the first device uses the new carrier signal generated based on the third carrier signal to send the second signal falls within the protection scope of this application.

The first device cannot support frequency shifting within a specific range when sending an uplink signal in an FDD system. For example, the first device may receive the first signal, the following third signal, and the like on the downlink frequency band of FDD, but cannot support sending of the second signal on the uplink frequency band of FDD. A problem that the first device does not support frequency shifting when transmitting uplink data in the FDD system can be resolved by using the method for indicating, by the network device, another auxiliary device to send a carrier signal to the first device on the uplink frequency band of FDD.

With reference to the second aspect, in some implementations of the second aspect, if the first device sends the second signal to the network device on the second frequency band, the method further includes: The first device receives a second carrier signal from the network device on the second frequency band, where the second carrier signal is used by the first device to send the second signal to the network device, and power of the second carrier signal is less than power of the first signal.

Specifically, the first device may send the second signal to the network device through backscattering.

It should be understood that the first device may receive the second carrier signal from the network device on the uplink frequency band of FDD, and the first device may further simultaneously send the second signal to the network device on the uplink frequency band of FDD by using the second carrier signal.

Specifically, the first device may send the second signal to the network device through backscattering.

Specifically, that the second carrier signal is used by the first device to send the second signal to the network device may be as follows: The second carrier signal carries uplink data and is sent as the second signal, or a new carrier signal generated based on the second carrier signal carries uplink data and is sent as the second signal, or the like. This is not limited in this application.

In addition, the first device may alternatively generate a new carrier signal based on the second carrier signal, and use the new carrier signal to send the second signal. Whether the first device directly uses the second carrier signal to send the second signal or the first device uses the new carrier signal generated based on the second carrier signal to send the second signal falls within the protection scope of this application.

In addition, the power of the second carrier signal may be less than the power of the first signal, or may be less than power of another downlink signal received by the first device from the network device.

According to the foregoing method, the network device may send the second carrier signal to the first device on the uplink frequency band of FDD, but the power of the second carrier signal needs to be less than power of an energy supply signal (for example, the first signal) or the power of the second carrier signal needs to be less than power of another downlink signal. This reduces blocking interference on a network device side, and can avoid a modification that needs to be made to hardware due to interference cancellation or interference suppression.

With reference to the second aspect, in some implementations of the second aspect, if the first device sends the second signal to the network device on the third frequency band, the method further includes: The first device receives a second carrier signal from the network device on the third frequency band, where the second carrier signal is used by the first device to send the second signal to the network device.

Specifically, the first device may send the second signal to the network device through backscattering.

Specifically, that the second carrier signal is used by the first device to send the second signal to the network device may be as follows: The second carrier signal carries uplink data and is sent as the second signal, or a new carrier signal generated based on the second carrier signal carries uplink data and is sent as the second signal, or the like. This is not limited in this application.

In addition, the first device may alternatively generate a new carrier signal based on the second carrier signal, and use the new carrier signal to send the second signal. Whether the first device directly uses the second carrier signal to send the second signal or the first device uses the new carrier signal generated based on the second carrier signal to send the second signal falls within the protection scope of this application.

A problem that the first device does not support frequency shifting when transmitting uplink data in an FDD system can be resolved by using the foregoing method for receiving, by the first device on an unlicensed frequency band with a power limitation, a carrier signal sent by the network device.

With reference to the second aspect, in some implementations of the second aspect, the method further includes: The first device receives a third signal from the network device on the first frequency band or the third frequency band, where the third signal is used to request the first device to send the second signal.

The first device may not only receive, on the first frequency band, a signal sent by the network device, but also receive, on the third frequency band, a signal sent by the network device, to improve flexibility of sending a signal and achieve high communication efficiency. In addition, the network device may select the first frequency band to send a signal with a high transmit power requirement, and may further select the third frequency band to send a signal with a low transmit frequency requirement, to properly allocate frequency domain resources.

According to a third aspect, a communication method is provided. The method includes: A second device receives first indication information from a network device, where the first indication information indicates the second device to send a first carrier signal to a first device on a second frequency band, the second frequency band includes an uplink frequency band of a licensed frequency division duplex FDD spectrum, the first carrier signal is used by the first device to send a second signal to the network device, and the second signal includes uplink data; and the second device sends the first carrier signal to the first device on the second frequency band.

Specifically, a frequency range of the second frequency band may be specified in a protocol.

Specifically, the second device may be customer premises equipment (customer premises equipment, CPE), customer premises equipment, customer premises equipment, or user equipment (user equipment, UE). This is not limited in this application.

Specifically, the second signal may be sent by the first device to the network device through backscattering.

Specifically, that the first carrier signal is used by the first device to send a second signal to the network device may be as follows: The first carrier signal carries uplink data and is sent as the second signal, or a new carrier signal generated based on the first carrier signal carries uplink data and is sent as the second signal, or the like. This is not limited in this application.

In addition, the first device may alternatively generate a new carrier signal based on the first carrier signal, and use the new carrier signal to send the second signal. Whether the first device directly uses the first carrier signal to send the second signal or the first device uses the new carrier signal generated based on the first carrier signal to send the second signal falls within the protection scope of this application.

The first device cannot support frequency shifting within a specific range when sending an uplink signal in an FDD system. For example, the first device may receive the first signal, the following third signal, and the like on a downlink frequency band of FDD, but cannot support sending of the second signal on the uplink frequency band of FDD. A problem that the first device does not support frequency shifting when transmitting uplink data in the FDD system can be resolved by using the method for indicating, by the network device, the second device to send a carrier signal to the first device on the uplink frequency band of FDD.

With reference to the third aspect, in some implementations of the third aspect, the first indication information includes at least one of a start moment for sending the first carrier signal, duration for sending the first carrier signal, and power for sending the first carrier signal.

As an example instead of a limitation, the first indication information may directly include fields indicating the start moment, the duration, the sending power, and the like for sending the first carrier signal. The first indication information may alternatively include other fields to indirectly indicate the start moment, the duration, the sending power, and the like for sending the first carrier signal.

The first indication information includes the foregoing information, so that sending of the first carrier signal can be accurately controlled.

According to a fourth aspect, a communication method is provided. The method includes: A network device sends a first signal to a first device in a first time period, where the first time period includes a downlink time period of a licensed time division duplex TDD spectrum, and the first signal is used to supply energy to the first device; and the network device receives a second signal from the first device in a second time period, where the second signal includes uplink data, and the second time period includes an uplink time period of the licensed time division duplex TDD spectrum.

Specifically, the first device may be a battery-free terminal device.

It should be understood that the first device may receive a downlink signal, send uplink data, and/or the like by using energy supplied by the first signal.

Specifically, the licensed time division duplex TDD spectrum may be a licensed frequency band, and a frequency range of the licensed frequency band may be specified in a protocol.

The network device may be allowed to send an energy supply signal with higher power on the licensed time division duplex TDD spectrum. Therefore, a coverage area of the network device can be expanded.

With reference to the fourth aspect, in some implementations of the fourth aspect, the method further includes: The network device sends a third signal to the first device in the first time period, where the third signal is used to request the first device to send the second signal.

It should be understood that the second signal may be independently reported by the first device to the network device, or may be reported based on a request of the network device. This is not limited in this application.

With reference to the fourth aspect, in some implementations of the fourth aspect, the method further includes: The network device sends a fourth carrier signal to the first device in the second time period, where the fourth carrier signal is used by the first device to send the second signal to the network device, and power of the fourth carrier signal sent by the network device is less than power of the first signal sent by the network device, or power of the fourth carrier signal sent by the network device is less than power of the third signal sent by the network device.

According to the foregoing method, the network device may send the fourth carrier signal to the first device on the licensed time division duplex TDD spectrum, but the power of the fourth carrier signal needs to be less than power of an energy supply signal (for example, the first signal) or the power of the fourth carrier signal needs to be less than power of another downlink signal (for example, the third signal). This reduces blocking interference on a network device side, and can avoid a modification that needs to be made to hardware due to interference cancellation or interference suppression.

According to a fifth aspect, a communication method is provided. The method includes: A third device sends a third signal to a first device on a second frequency band, where the third signal is used to request the first device to send a second signal; and the third device receives the second signal from the first device on the second frequency band, where the second signal includes uplink data.

Alternatively, the method includes: A third device sends a third signal to a first device on a third frequency band; and the third device receives a second signal from the first device on the third frequency band.

The second frequency band includes an uplink frequency band of a licensed frequency division duplex FDD spectrum, and the third frequency band includes a frequency band of an unlicensed spectrum.

Specifically, the third device may be a relay node. For example, the third device may be a handheld terminal. This is not limited in this application.

With reference to the fifth aspect, in some implementations of the fifth aspect, the method further includes: The third device sends a fourth carrier signal to the first device on the second frequency band or the third frequency band, where the fourth carrier signal is used by the first device to send the second signal to the third device on the second frequency band or the third frequency band.

Specifically, the third device may receive the second signal sent by the first device through backscattering.

Specifically, that the fourth carrier signal is used by the first device to send the second signal to the third device may be as follows: The fourth carrier signal carries uplink data and is sent as the second signal, or a new carrier signal generated based on the fourth carrier signal carries uplink data and is sent as the second signal. This is not limited in this application.

In addition, the first device may alternatively generate a new carrier signal based on the fourth carrier signal, and use the new carrier signal to send the second signal. Whether the first device directly uses the fourth carrier signal to send the second signal or the first device uses the new carrier signal generated based on the fourth carrier signal to send the second signal falls within the protection scope of this application.

The first device cannot support frequency shifting within a specific range when sending an uplink signal in an FDD system. For example, the first device may receive a first signal, the following third signal, and the like on a downlink frequency band of FDD, but cannot support sending of the second signal on the uplink frequency band of FDD. A problem that the first device does not support frequency shifting when transmitting uplink data in the FDD system can be resolved by using the method for sending, by the third device, a carrier signal to the first device on the uplink frequency band of FDD.

According to a sixth aspect, a communication method is provided. The method includes: A first device receives a third signal from a third device on a second frequency band, where the third signal is used to request the first device to send a second signal; and the first device sends the second signal to the third device on the second frequency band, where the second signal includes uplink data.

Alternatively, the method includes: A first device receives a third signal from a third device on a third frequency band; and the first device sends a second signal to the third device on the third frequency band.

The second frequency band includes an uplink frequency band of a licensed frequency division duplex FDD spectrum, and the third frequency band includes a frequency band of an unlicensed spectrum.

Specifically, the third device may be a relay node. For example, the third device may be a handheld terminal. This is not limited in this application.

With reference to the sixth aspect, in some implementations of the sixth aspect, the method further includes: The first device receives a first signal from a network device on a first frequency band, where the first frequency band includes a downlink frequency band of the FDD spectrum, and the first signal is used to supply energy to the first device.

The first device may be allowed to receive an energy supply signal with higher power from the network device on the downlink frequency band of licensed FDD. Therefore, a coverage area of the network device can be expanded.

With reference to the sixth aspect, in some implementations of the sixth aspect, that the first device receives a first signal from a network device on a first frequency band includes: The first device receives the first signal from the network device in a first time period of the first frequency band and the second frequency band, or the first device receives the first signal from the network device in a second time period of the first frequency band and the third frequency band.

The first time period and the second time period may be predefined time periods. The time period may alternatively be a time unit or the like. This is not limited in this application.

The first device may receive an energy supply signal with higher power from the network device on both the downlink frequency band of licensed FDD and another frequency band. Therefore, the coverage area of the network device can be expanded.

With reference to the sixth aspect, in some implementations of the sixth aspect, the method further includes: The first device receives a fourth carrier signal from the third device on the second frequency band or the third frequency band, where the fourth carrier signal is used by the first device to send the second signal to the third device on the second frequency band or the third frequency band.

Specifically, the third device may receive the second signal sent by the first device through backscattering.

Specifically, that the fourth carrier signal is used by the first device to send the second signal to the third device may be as follows: The fourth carrier signal carries uplink data and is sent as the second signal, or a new carrier signal generated based on the fourth carrier signal carries uplink data and is sent as the second signal. This is not limited in this application.

In addition, the first device may alternatively generate a new carrier signal based on the fourth carrier signal, and use the new carrier signal to send the second signal. Whether the first device directly uses the fourth carrier signal to send the second signal or the first device uses the new carrier signal generated based on the fourth carrier signal to send the second signal falls within the protection scope of this application.

The first device cannot support frequency shifting within a specific range when sending an uplink signal in an FDD system. For example, the first device may receive the first signal, the following third signal, and the like on the downlink frequency band of FDD, but cannot support sending of the second signal on the uplink frequency band of FDD. A problem that the first device does not support frequency shifting when transmitting uplink data in the FDD system can be resolved by using the method for sending, by the third device, a carrier signal to the first device on the uplink frequency band of FDD.

According to a seventh aspect, a communication apparatus is provided. The apparatus includes: a sending unit, configured to send a first signal to a first device on a first frequency band, where the first frequency band includes a downlink frequency band of a licensed frequency division duplex FDD spectrum, and the first signal is used to supply energy to the first device; and a receiving unit, configured to receive a second signal from the first device on a second frequency band or a third frequency band, where the second signal includes uplink data, the second frequency band includes an uplink frequency band of the licensed frequency division duplex FDD spectrum, and the third frequency band includes a frequency band of an unlicensed spectrum.

Specifically, the frequency band of the unlicensed spectrum may be a frequency band of an ISM spectrum.

Specifically, a frequency range of the first frequency band, a frequency range of the second frequency band, and a frequency range of the third frequency band may be specified in a protocol.

Specifically, the first device may be a battery-free terminal device.

It should be understood that the first device may receive a downlink signal, send uplink data, and/or the like by using energy supplied by the first signal.

The apparatus may be allowed to send an energy supply signal with higher power on the downlink frequency band of licensed FDD. Therefore, a coverage area of the apparatus can be expanded. In addition, the apparatus may not only receive, on the uplink frequency band of licensed FDD, an uplink signal sent by the first device, but also receive, on the frequency band of the unlicensed spectrum, an uplink signal sent by the first device, thereby improving flexibility of frequency domain resource allocation.

With reference to the seventh aspect, in some implementations of the seventh aspect, that a sending unit is configured to send a first signal to a first device on a first frequency band further includes: The sending unit is configured to send the first signal to the first device in a first time period of the first frequency band and the second frequency band, or the sending unit is configured to send the first signal to the first device in a second time period of the first frequency band and the third frequency band.

With reference to the seventh aspect, in some implementations of the seventh aspect, if the receiving unit is configured to receive the second signal from the first device on the second frequency band, the sending unit is further configured to send first indication information to a second device, where the first indication information indicates the second device to send a first carrier signal to the first device on the second frequency band, and the first carrier signal is used by the first device to send the second signal to the apparatus.

Specifically, the second device may be customer premises equipment (customer premises equipment, CPE), customer premises equipment, customer premises equipment, or user equipment (user equipment, UE). This is not limited in this application.

Specifically, the apparatus may receive the second signal sent by the first device through backscattering.

Specifically, that the first carrier signal is used by the first device to send the second signal to the apparatus may be as follows: The first carrier signal carries uplink data and is sent as the second signal, or a new carrier signal generated based on the first carrier signal carries uplink data and is sent as the second signal, or the like. This is not limited in this application.

In addition, the first device may alternatively generate a new carrier signal based on the first carrier signal, and use the new carrier signal to send the second signal. Whether the first device directly uses the first carrier signal to send the second signal or the first device uses the new carrier signal generated based on the first carrier signal to send the second signal falls within the protection scope of this application.

The first device cannot support frequency shifting within a specific range when sending an uplink signal in an FDD system. For example, the first device may receive the first signal, the following third signal, and the like on the downlink frequency band of FDD, but cannot support sending of the second signal on the uplink frequency band of FDD. A problem that the first device does not support frequency shifting when transmitting uplink data in the FDD system can be resolved by indicating, by the apparatus, another auxiliary device to send a carrier signal to the first device on the uplink frequency band of FDD.

With reference to the seventh aspect, in some implementations of the seventh aspect, that a receiving unit is configured to receive a second signal from the first device on a second frequency band or a third frequency band includes: The sending unit is configured to send second indication information to a third device, where the second indication information indicates the third device to send a third carrier signal to the first device on the second frequency band or the third frequency band, and the third carrier signal is used by the first device to send the second signal to the communication apparatus, and the receiving unit is further configured to receive the second signal from the first device on the second frequency band or the third frequency band.

With reference to the seventh aspect, in some implementations of the seventh aspect, the first indication information includes at least one of a start moment for sending the first carrier signal, duration for sending the first carrier signal, and power for sending the first carrier signal.

As an example instead of a limitation, the first indication information may directly include fields indicating the start moment, the duration, the sending power, and the like for sending the first carrier signal. The first indication information may alternatively include other fields to indirectly indicate the start moment, the duration, the sending power, and the like for sending the first carrier signal.

The first indication information includes the foregoing information, so that sending of the first carrier signal can be accurately controlled.

With reference to the seventh aspect, in some implementations of the seventh aspect, the second indication information includes at least one of a start moment for sending the third carrier signal, duration for sending the third carrier signal, and power for sending the third carrier signal.

With reference to the seventh aspect, in some implementations of the seventh aspect, if the receiving unit is configured to receive the second signal from the first device on the second frequency band, the sending unit is further configured to send a second carrier signal to the first device on the second frequency band, where the second carrier signal is used by the first device to send the second signal to the apparatus, and power of the second carrier signal sent by the apparatus is less than power of the first signal sent by the apparatus.

It should be understood that the apparatus may send the second carrier signal to the first device on the uplink frequency band of FDD, and the apparatus may further simultaneously receive the second signal from the first device on the uplink frequency band of FDD.

Specifically, the apparatus may receive the second signal sent by the first device through backscattering.

Specifically, that the second carrier signal is used by the first device to send the second signal to the apparatus may be as follows: The second carrier signal carries uplink data and is sent as the second signal, or a new carrier signal generated based on the second carrier signal carries uplink data and is sent as the second signal, or the like. This is not limited in this application.

In addition, the first device may alternatively generate a new carrier signal based on the second carrier signal, and use the new carrier signal to send the second signal. Whether the first device directly uses the second carrier signal to send the second signal or the first device uses the new carrier signal generated based on the second carrier signal to send the second signal falls within the protection scope of this application.

In addition, the power of the second carrier signal sent by the apparatus may be less than the power of the first signal sent by the apparatus, or may be less than power of another downlink signal sent by the apparatus to the first device.

The apparatus may send the second carrier signal to the first device on the uplink frequency band of FDD, but the power of the second carrier signal needs to be less than power of an energy supply signal (for example, the first signal) or the power of the second carrier signal needs to be less than power of another downlink signal. This reduces blocking interference on an apparatus side, and can avoid a modification that needs to be made to hardware due to interference cancellation or interference suppression.

With reference to the seventh aspect, in some implementations of the seventh aspect, if the receiving unit is configured to receive the second signal from the first device on the third frequency band, the sending unit is further configured to send a second carrier signal to the first device on the third frequency band, where the second carrier signal is used by the first device to send the second signal to the apparatus.

Specifically, the apparatus may receive the second signal sent by the first device through backscattering.

Specifically, that the second carrier signal is used by the first device to send the second signal to the apparatus may be as follows: The second carrier signal carries uplink data and is sent as the second signal, or a new carrier signal generated based on the second carrier signal carries uplink data and is sent as the second signal, or the like. This is not limited in this application.

In addition, the first device may alternatively generate a new carrier signal based on the second carrier signal, and use the new carrier signal to send the second signal. Whether the first device directly uses the second carrier signal to send the second signal or the first device uses the new carrier signal generated based on the second carrier signal to send the second signal falls within the protection scope of this application.

A problem that the first device does not support frequency shifting when transmitting uplink data in an FDD system can be resolved by sending, by the apparatus, a carrier signal to the first device on an unlicensed frequency band with a power limitation.

With reference to the seventh aspect, in some implementations of the seventh aspect, the sending unit is further configured to send a third signal to the first device on the first frequency band or the third frequency band, where the third signal is used to request the first device to send the second signal.

The apparatus may not only send a signal to the first device on the first frequency band, but also send a signal to the first device on the third frequency band, to improve flexibility of sending a signal and achieve high communication efficiency. In addition, the apparatus may select the first frequency band to send a signal with a high transmit power requirement, and may further select the third frequency band to send a signal with a low transmit frequency requirement, to properly allocate frequency domain resources.

According to an eighth aspect, a communication apparatus is provided. The apparatus includes: a receiving unit, configured to receive a first signal from a network device on a first frequency band, where the first frequency band includes a downlink frequency band of a licensed frequency division duplex FDD spectrum, and the first signal is used to supply energy to the apparatus; and a sending unit, configured to send a second signal to the network device on a second frequency band or a third frequency band, where the second signal includes uplink data, the second frequency band includes an uplink frequency band of the licensed frequency division duplex FDD spectrum, and the third frequency band includes a frequency band of an unlicensed spectrum.

Specifically, the frequency band of the unlicensed spectrum may be a frequency band of an ISM spectrum.

Specifically, a frequency range of the first frequency band, a frequency range of the second frequency band, and a frequency range of the third frequency band may be specified in a protocol.

Specifically, the apparatus may be a battery-free terminal device.

It should be understood that the apparatus may receive a downlink signal, send uplink data, and/or the like by using energy supplied by the first signal.

The apparatus may be allowed to receive an energy supply signal with higher power from the network device on the downlink frequency band of licensed FDD. Therefore, a coverage area of the network device can be expanded. In addition, the apparatus may not only send an uplink signal to the network device on the uplink frequency band of licensed FDD, but also send an uplink signal to the network device on the frequency band of the unlicensed spectrum, thereby improving flexibility of frequency domain resource allocation.

With reference to the eighth aspect, in some implementations of the eighth aspect, that a receiving unit is configured to receive a first signal from a network device on a first frequency band includes: The receiving unit is configured to receive the first signal from the network device in a first time period of the first frequency band and the second frequency band, or the receiving unit is configured to receive the first signal from the network device in a second time period of the first frequency band and the third frequency band.

With reference to the eighth aspect, in some implementations of the eighth aspect, if the sending unit is configured to send the second signal to the network device on the second frequency band, the receiving unit is further configured to receive a first carrier signal from a second device on the second frequency band, where the first carrier signal is used by the apparatus to send the second signal to the network device.

Specifically, the second device may be customer premises equipment (customer premises equipment, CPE), customer premises equipment, customer premises equipment, or user equipment (user equipment, UE). This is not limited in this application.

Specifically, the apparatus may send the second signal to the network device through backscattering.

Specifically, that the first carrier signal is used by the apparatus to send the second signal to the network device may be as follows: The first carrier signal carries uplink data and is sent to the network device as the second signal, or a new carrier signal generated based on the first carrier signal carries uplink data and is sent to the network device as the second signal, or the like. This is not limited in this application.

In addition, the apparatus may alternatively generate a new carrier signal based on the first carrier signal, and use the new carrier signal to send the second signal. Whether the apparatus directly uses the first carrier signal to send the second signal or the apparatus uses the new carrier signal generated based on the first carrier signal to send the second signal falls within the protection scope of this application.

The apparatus cannot support frequency shifting within a specific range when sending an uplink signal in an FDD system. For example, the apparatus may receive the first signal, the following third signal, and the like on the downlink frequency band of FDD, but cannot support sending of the second signal on the uplink frequency band of FDD. A problem that the apparatus does not support frequency shifting when transmitting uplink data in the FDD system can be resolved by indicating, by the network device, another auxiliary device to send a carrier signal to the apparatus on the uplink frequency band of FDD.

With reference to the eighth aspect, in some implementations of the eighth aspect, the receiving unit is further configured to receive a third carrier signal from a third device on the second frequency band or the third frequency band, where the third carrier signal is used by the communication apparatus to send the second signal to the network device on the second frequency band or the third frequency band.

With reference to the eighth aspect, in some implementations of the eighth aspect, if the sending unit is configured to send the second signal to the network device on the second frequency band, the receiving unit is further configured to receive a second carrier signal from the network device, where the second carrier signal is used by the apparatus to send the second signal to the network device, and power of the second carrier signal is less than power of the first signal.

Specifically, the apparatus may send the second signal to the network device through backscattering.

It should be understood that the apparatus may receive the second carrier signal from the network device on the uplink frequency band of FDD, and the apparatus may further simultaneously send the second signal to the network device on the uplink frequency band of FDD by using the second carrier signal.

Specifically, the apparatus may send the second signal to the network device through backscattering.

Specifically, that the second carrier signal is used by the apparatus to send the second signal to the network device may be as follows: The second carrier signal carries uplink data and is sent to the network device as the second signal, or a new carrier signal generated based on the second carrier signal carries uplink data and is sent to the network device as the second signal, or the like. This is not limited in this application.

In addition, the apparatus may alternatively generate a new carrier signal based on the second carrier signal, and use the new carrier signal to send the second signal. Whether the apparatus directly uses the second carrier signal to send the second signal or the apparatus uses the new carrier signal generated based on the second carrier signal to send the second signal falls within the protection scope of this application.

In addition, the power of the second carrier signal may be less than the power of the first signal, or may be less than power of another downlink signal received by the apparatus from the network device.

The network device may send the second carrier signal to the apparatus on the uplink frequency band of FDD, but the power of the second carrier signal needs to be less than power of an energy supply signal (for example, the first signal) or the power of the second carrier signal needs to be less than power of another downlink signal. This reduces blocking interference on a network device side, and can avoid a modification that needs to be made to hardware due to interference cancellation or interference suppression.

With reference to the eighth aspect, in some implementations of the eighth aspect, if the sending unit is configured to send the second signal to the network device on the third frequency band, the receiving unit is further configured to receive a second carrier signal from the network device on the third frequency band, where the second carrier signal is used by the apparatus to send the second signal to the network device.

Specifically, the apparatus may send the second signal to the network device through backscattering.

Specifically, that the second carrier signal is used by the apparatus to send the second signal to the network device may be as follows: The second carrier signal carries uplink data and is sent to the network device as the second signal, or a new carrier signal generated based on the second carrier signal carries uplink data and is sent to the network device as the second signal, or the like. This is not limited in this application.

In addition, the apparatus may alternatively generate a new carrier signal based on the second carrier signal, and use the new carrier signal to send the second signal. Whether the apparatus directly uses the second carrier signal to send the second signal or the apparatus uses the new carrier signal generated based on the second carrier signal to send the second signal falls within the protection scope of this application.

A problem that the apparatus does not support frequency shifting when transmitting uplink data in an FDD system can be resolved by receiving, by the apparatus on an unlicensed frequency band with a power limitation, a carrier signal sent by the network device.

With reference to the eighth aspect, in some implementations of the eighth aspect, the receiving unit is further configured to receive a third signal from the network device on the first frequency band or the third frequency band, where the third signal is used to request the first device to send the second signal.

The network device may not only send a signal to the apparatus on the first frequency band, but also send a signal to the apparatus on the third frequency band, to improve flexibility of sending a signal and achieve high communication efficiency. In addition, the network device may select the first frequency band to send a signal with a high transmit power requirement, and may further select the third frequency band to send a signal with a low transmit frequency requirement, to properly allocate frequency domain resources.

According to a ninth aspect, a communication apparatus is provided. The apparatus includes: a receiving unit, configured to receive first indication information from a network device, where the first indication information indicates the apparatus to send a first carrier signal to a first device on a second frequency band, the second frequency band includes an uplink frequency band of a licensed frequency division duplex FDD spectrum, the first carrier signal is used by the first device to send a second signal to the network device, and the second signal includes uplink data; and a sending unit, configured to send the first carrier signal to the first device on the second frequency band.

Specifically, a frequency range of the second frequency band may be specified in a protocol.

Specifically, the apparatus may be customer premises equipment (customer premises equipment, CPE), customer premises equipment, customer premises equipment, or user equipment (user equipment, UE). This is not limited in this application.

Specifically, the second signal may be sent by the first device to the network device through backscattering.

Specifically, that the first carrier signal is used by the first device to send a second signal to the network device may be as follows: The first carrier signal carries uplink data and is sent as the second signal, or a new carrier signal generated based on the first carrier signal carries uplink data and is sent as the second signal, or the like. This is not limited in this application.

In addition, the first device may alternatively generate a new carrier signal based on the first carrier signal, and use the new carrier signal to send the second signal. Whether the first device directly uses the first carrier signal to send the second signal or the first device uses the new carrier signal generated based on the first carrier signal to send the second signal falls within the protection scope of this application.

The first device cannot support frequency shifting within a specific range when sending an uplink signal in an FDD system. For example, the first device may receive the first signal, the following third signal, and the like on a downlink frequency band of FDD, but cannot support sending of the second signal on the uplink frequency band of FDD. A problem that the first device does not support frequency shifting when transmitting uplink data in the FDD system can be resolved by indicating, by the network device, the apparatus to send a carrier signal to the first device on the uplink frequency band of FDD.

With reference to the ninth aspect, in some implementations of the ninth aspect, the first indication information includes at least one of a start moment for sending the first carrier signal, duration for sending the first carrier signal, and power for sending the first carrier signal.

As an example instead of a limitation, the first indication information may directly include fields indicating the start moment, the duration, the sending power, and the like for sending the first carrier signal. The first indication information may alternatively include other fields to indirectly indicate the start moment, the duration, the sending power, and the like for sending the first carrier signal.

The first indication information includes the foregoing information, so that sending of the first carrier signal can be accurately controlled.

According to a tenth aspect, a communication apparatus is provided. The apparatus includes: a sending unit, configured to send a first signal to a first device in a first time period, where the first time period includes a downlink time period of a licensed time division duplex TDD spectrum, and the first signal is used to supply energy to the first device; and a receiving unit, configured to receive a second signal from the first device in a second time period, where the second signal includes uplink data, and the second time period includes an uplink time period of the licensed time division duplex TDD spectrum.

Specifically, the first device may be a battery-free terminal device.

It should be understood that the first device may receive a downlink signal, send uplink data, and/or the like by using energy supplied by the first signal.

Specifically, the licensed time division duplex TDD spectrum is a licensed frequency band, and a frequency range of the licensed frequency band may be specified in a protocol.

The apparatus may be allowed to send an energy supply signal with higher power on the licensed time division duplex TDD spectrum. Therefore, a coverage area of the apparatus can be expanded.

With reference to the tenth aspect, in some implementations of the tenth aspect, the sending unit is further configured to send a third signal to the first device in the first time period, where the third signal is used to request the first device to send the second signal.

It should be understood that the second signal may be independently reported by the first device to the apparatus, or may be reported based on a request of the apparatus. This is not limited in this application.

With reference to the tenth aspect, in some implementations of the tenth aspect, the sending unit is further configured to send a fourth carrier signal to the first device in the first time period, where the fourth carrier signal is used by the first device to send the second signal to the apparatus, and power of the fourth carrier signal sent by the apparatus is less than power of the first signal sent by the apparatus, or power of the fourth carrier signal sent by the apparatus is less than power of the third signal sent by the apparatus.

The apparatus may send the fourth carrier signal to the first device on the licensed time division duplex TDD spectrum, but the power of the fourth carrier signal needs to be less than power of an energy supply signal (for example, the first signal) or the power of the fourth carrier signal needs to be less than power of another downlink signal (for example, the third signal). This reduces blocking interference on an apparatus side, and can avoid a modification that needs to be made to hardware due to interference cancellation or interference suppression.

According to an eleventh aspect, a communication apparatus is provided. The apparatus includes: a sending unit, configured to send a third signal to a first device on a second frequency band, where the third signal is used to request the first device to send a second signal; and a receiving unit, configured to receive the second signal from the first device on the second frequency band, where the second signal includes uplink data.

Alternatively, the sending unit is configured to send a third signal to a first device on a third frequency band; and the receiving unit is configured to receive a second signal from the first device on the third frequency band.

The second frequency band includes an uplink frequency band of a licensed frequency division duplex FDD spectrum, and the third frequency band includes a frequency band of an unlicensed spectrum.

With reference to the eleventh aspect, in some implementations of the eleventh aspect, the sending unit is further configured to send a fourth carrier signal to the first device on the second frequency band or the third frequency band, where the fourth carrier signal is used by the first device to send the second signal to the communication apparatus on the second frequency band or the third frequency band.

According to a twelfth aspect, a communication apparatus is provided. The apparatus includes: a receiving unit, configured to receive a third signal from a third device on a second frequency band, where the third signal is used to request a first device to send a second signal; and a sending unit, configured to send the second signal to the third device on the second frequency band, where the second signal includes uplink data.

Alternatively, the sending unit is configured to receive a third signal from a third device on a third frequency band; and the receiving unit is configured to send the second signal to the third device on the third frequency band.

The second frequency band includes an uplink frequency band of a licensed frequency division duplex FDD spectrum, and the third frequency band includes a frequency band of an unlicensed spectrum.

With reference to the twelfth aspect, in some implementations of the twelfth aspect, the receiving unit is further configured to receive a first signal from a network device on a first frequency band, where the first frequency band includes a downlink frequency band of the FDD spectrum, and the first signal is used to supply energy to the first device.

With reference to the twelfth aspect, in some implementations of the twelfth aspect, that the receiving unit is further configured to receive a first signal from a network device on a first frequency band includes: The receiving unit is further configured to receive the first signal from the network device in a first time period of the first frequency band and the second frequency band, or the receiving unit is further configured to receive the first signal from the network device in a second time period of the first frequency band and the third frequency band.

With reference to the twelfth aspect, in some implementations of the twelfth aspect, the receiving unit is further configured to receive a fourth carrier signal from the third device on the second frequency band or the third frequency band, where the fourth carrier signal is used by the communication apparatus to send the second signal to the third device on the second frequency band or the third frequency band.

According to a thirteenth aspect, a communication apparatus is provided. The apparatus may be a network device, may be a part (for example, a processor, a chip, or a chip system) in a network device, or may be a logical module or software that can implement all or some functions of a network device. The apparatus has a function of implementing the first aspect, the fourth aspect, and the possible implementations of the first aspect and the fourth aspect. The function may be implemented by hardware, or may be implemented by executing corresponding software by hardware. The hardware or the software includes one or more modules corresponding to the function.

In a possible design, the apparatus includes a receiving unit and a sending unit. The receiving unit and the sending unit may be at least one of a transceiver, a receiver, and a transmitter. The receiving unit and the sending unit may include a radio frequency circuit or an antenna. Optionally, the apparatus further includes a processing unit, and the processing unit may be a processor. Optionally, the apparatus further includes a storage unit, and the storage unit may be, for example, a storage. When the apparatus includes a storage unit, the storage unit is configured to store a program or instructions. The processing unit is connected to the storage unit, and the processing unit may execute the program or the instructions stored in the storage unit or instructions from another source, to enable the apparatus to perform the communication method according to the first aspect, the fourth aspect, and the possible implementations of the first aspect and the fourth aspect. In this design, the apparatus may be a network device.

In another possible design, when the apparatus is a chip, the chip includes a receiving unit, a sending unit, and a processing unit. The receiving unit and the sending unit may be, for example, input/output interfaces, pins, or circuits in the chip. The processing unit may be, for example, a processor. The processing unit may execute instructions, to enable the chip in the network device to perform the communication method according to any one of the first aspect, the fourth aspect, and the possible implementations of the first aspect and the fourth aspect. Optionally, the processing unit may execute instructions in a storage unit, and the storage unit may be a storage module, for example, a register or a cache, in the chip. The storage unit may alternatively be located inside the communication device but outside the chip, for example, a read-only memory (read-only memory, ROM) or another type of static storage device that can store static information and instructions, or a random access memory (random access memory, RAM).

Any processor described above may be a general-purpose central processing unit (CPU), a microprocessor, an application-specific integrated circuit (application-specific integrated circuit, ASIC), or one or more integrated circuits configured to control program execution of the communication method according to the first aspect and the fourth aspect.

According to a fourteenth aspect, a communication apparatus is provided. The apparatus may be a first device, may be a part (for example, a processor, a chip, or a chip system) in a first device, or may be a logical module or software that can implement all or some functions of a first device. The apparatus has a function of implementing the second aspect, the sixth aspect, and the possible implementations of the second aspect and the sixth aspect. The function may be implemented by hardware, or may be implemented by executing corresponding software by hardware. The hardware or the software includes one or more modules corresponding to the function.

In a possible design, the apparatus includes a receiving unit and a sending unit. The receiving unit and the sending unit may be, for example, at least one of a transceiver, a receiver, and a transmitter. The receiving unit and the sending unit may include a radio frequency circuit or an antenna.

Optionally, the apparatus further includes a processing unit, and the processing unit may be a processor.

Optionally, the apparatus further includes a storage unit, and the storage unit may be, for example, a storage. When the apparatus includes a storage unit, the storage unit is configured to store a program or instructions. The processing unit is connected to the storage unit, and the processing unit may execute the program or the instructions stored in the storage unit or instructions from another source, to enable the apparatus to perform the method according to any one of the second aspect, the sixth aspect, or the second aspect and the sixth aspect.

In another possible design, when the apparatus is a chip, the chip includes a receiving unit and a sending unit. The receiving unit and the sending unit may be, for example, input/output interfaces, pins, or circuits in the chip.

Optionally, the apparatus may further include a processing unit, and the processing unit may be, for example, a processor. The processing module may execute a program or instructions, to enable the chip in the first device to perform the communication method according to any one of the second aspect, the sixth aspect, and the possible implementations of the second aspect and the sixth aspect.

Optionally, the processing unit may execute instructions in a storage unit, and the storage unit may be a storage module, for example, a register or a cache, in the chip. The storage unit may alternatively be located inside the first device but outside the chip, for example, a read-only memory (read-only memory, ROM) or another type of static storage device that can store static information and instructions, or a random access memory (random access memory, RAM).

Any processor described above may be a general-purpose central processing unit (CPU), a microprocessor, an application-specific integrated circuit (application-specific integrated circuit, ASIC), or one or more integrated circuits configured to control program execution of the communication method according to the second aspect and the sixth aspect.

According to a fifteenth aspect, a communication apparatus is provided. The apparatus may be a second device or a third device, may be a part (for example, a processor, a chip, or a chip system) in a second device or a third device, or may be a logical module or software that can implement all or some functions of a second device or a third device. The apparatus has a function of implementing the third aspect, the fifth aspect, and the possible implementations of the third aspect and the fifth aspect. The function may be implemented by hardware, or may be implemented by executing corresponding software by hardware. The hardware or the software includes one or more modules corresponding to the function.

In a possible design, the apparatus includes a receiving unit and a sending unit. The receiving unit and the sending unit may be, for example, at least one of a transceiver, a receiver, and a transmitter. The receiving unit and the sending unit may include a radio frequency circuit or an antenna.

Optionally, the apparatus further includes a processing unit, and the processing unit may be a processor.

Optionally, the apparatus further includes a storage unit, and the storage unit may be, for example, a storage. When the apparatus includes a storage unit, the storage unit is configured to store a program or instructions. The processing unit is connected to the storage unit, and the processing unit may execute the program or the instructions stored in the storage unit or instructions from another source, to enable the apparatus to perform the method according to any one of the third aspect, the fifth aspect, or the third aspect and the fifth aspect.

In another possible design, when the apparatus is a chip, the chip includes a receiving unit and a sending unit. The receiving unit and the sending unit may be, for example, input/output interfaces, pins, or circuits in the chip.

Optionally, the apparatus may further include a processing unit, and the processing unit may be, for example, a processor. The processing module may execute a program or instructions, to enable the chip in the second device or the third device to perform the communication method according to any one of the third aspect, the fifth aspect, and the possible implementations of the third aspect and the fifth aspect.

Optionally, the processing unit may execute instructions in a storage unit, and the storage unit may be a storage module, for example, a register or a cache, in the chip. The storage unit may alternatively be located inside the second device or the third device but outside the chip, for example, a read-only memory (read-only memory, ROM) or another type of static storage device that can store static information and instructions, or a random access memory (random access memory, RAM).

Any processor described above may be a general-purpose central processing unit (CPU), a microprocessor, an application-specific integrated circuit (application-specific integrated circuit, ASIC), or one or more integrated circuits configured to control program execution of the communication method according to the third aspect and the fifth aspect.

According to a sixteenth aspect, a computer storage medium is provided. The computer storage medium stores program code, and the program code indicates instructions for performing the method according to any one of the first aspect, the second aspect, the third aspect, the fourth aspect, the fifth aspect, the sixth aspect, and the possible implementations of the first aspect, the second aspect, the third aspect, the fourth aspect, the fifth aspect, and the sixth aspect.

According to a seventeenth aspect, a computer program product including computer instructions or computer code is provided. When the computer program product is run on a computer, the computer is enabled to perform the method according to any one of the first aspect, the second aspect, the third aspect, the fourth aspect, the fifth aspect, the sixth aspect, and the possible implementations of the first aspect, the second aspect, the third aspect, the fourth aspect, the fifth aspect, and the sixth aspect.

According to an eighteenth aspect, a communication system is provided. The communication system includes at least one of an apparatus having a function of implementing the methods and the possible designs of the first aspect, an apparatus having a function of implementing the methods and the possible designs of the second aspect, an apparatus having a function of implementing the methods and the possible designs of the third aspect, an apparatus having a function of implementing the methods and the possible designs of the fourth aspect, an apparatus having a function of implementing the methods and the possible designs of the fifth aspect, and an apparatus having a function of implementing the methods and the possible designs of the sixth aspect. The apparatus having the function of implementing the methods and the possible designs of the first aspect or the fourth aspect may be a network device, the apparatus having the function of implementing the methods and the possible designs of the second aspect or the sixth aspect may be a first device, the apparatus having the function of implementing the methods and the possible designs of the third aspect may be a second device, and the apparatus having the function of implementing the methods and the possible designs of the fifth aspect may be a third device.

Specifically, for advantageous effects of other aspects, refer to the advantageous effects described in the first aspect, the second aspect, the third aspect, the fourth aspect, the fifth aspect, and the sixth aspect.

### BRIEF DESCRIPTION OF DRAWINGS

FIG. 1 is a diagram of a communication scenario applicable to an embodiment of this application;
FIG. 2 is a diagram of a frequency domain resource allocation method according to this application;
FIG. 3 is a schematic flowchart of another frequency domain resource allocation method according to this application;
FIG. 4 is a schematic flowchart of another frequency domain resource allocation method according to this application;
FIG. 5 is a schematic flowchart of another time domain resource allocation method according to this application;
FIG. 6 is a schematic flowchart of another frequency domain resource allocation method according to this application;
FIG. 7 is a schematic flowchart of another frequency domain resource allocation method according to this application;
FIG. 8 is a schematic flowchart of another frequency domain resource allocation method according to this application;
FIG. 9 is a schematic flowchart of another frequency domain resource allocation method according to this application;
FIG. 10 is a schematic flowchart of another frequency domain resource allocation method according to this application;
FIG. 11 is a block diagram of an example of a communication apparatus according to this application; and
FIG. 12 is a block diagram of another example of a communication apparatus according to this application.

### DESCRIPTION OF EMBODIMENTS

The following describes technical solutions of this application with reference to accompanying drawings.

Wireless communication systems to which embodiments of this application may be applied include but are not limited to a global system for mobile communications (global system for mobile communications, GSM), a long term evolution (long term evolution, LTE) frequency division duplex (frequency division duplex, FDD) system, LTE time division duplex (time division duplex, TDD), an LTE system, a long term evolution advanced (LTE-Advanced, LTE-A) system, a next-generation communication system (for example, a 5G communication system), a system integrating a plurality of access systems, or an evolved system (for example, a 6G communication system).

The technical solutions provided in this application may be further applied to machine type communication (machine type communication, MTC), long term evolution-machine type communication (Long Term Evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-X (vehicle-to-X, V2X, where X may stand for anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

A terminal device in this application may also be referred to as user equipment (User Equipment, UE), an access terminal, a subscriber unit (subscriber unit), a subscriber station, a mobile station, a mobile console, a remote station, a remote terminal, a mobile device, a user terminal, a terminal, a wireless communication device, a user agent, or a user apparatus. The terminal device may be a station (STATION, ST) in a WLAN, and may be a cellular phone (cellular phone), a cordless phone, a smartphone, a wireless data card, a session initiation protocol (Session Initiation Protocol, SIP) phone, a wireless local loop (Wireless Local Loop, WLL) station, a personal digital assistant (Personal Digital Assistant, PDA) device, a tablet computer, a laptop computer, a machine-type communication terminal, a wireless modem, a handheld device with a wireless communication function, a vehicle-mounted device, a wearable device, a computing device, or another processing device connected to a wireless modem, for example, a terminal device in a 5G network, a terminal device in a future evolved public land mobile network (Public Land Mobile Network, PLMN), or the like.

As an example instead of a limitation, in embodiments of this application, the terminal device may alternatively be a wearable device. The wearable device may also be referred to as a wearable intelligent device, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not merely a hardware device, but implements a powerful function through software support, data exchange, and cloud interaction. In a broad sense, the wearable intelligent device includes a full-featured and large-sized device that can implement all or some functions without depending on a smartphone, for example, a smart watch or smart glasses, and includes a device that provides only one type of application function and that needs to be used in combination with another device such as a smartphone, for example, various smart bands or various pieces of smart jewelry for monitoring physical signs.

In addition, in embodiments of this application, the terminal device may alternatively be a terminal device in an internet of things (Internet of Things, IoT) system. IoT is an important part of information technology development in the future, and has a main technical feature in which things are connected to a network by using a communication technology to implement an intelligent network with human-machine interconnection and thing-thing interconnection.

The terminal device may alternatively be a terminal device that supports a wakeup receiver, or may be a terminal device that does not support a wakeup receiver. The terminal device may be a terminal device that supports a reflective communication mechanism, for example, a tag. A network device in this application may be a radio access network (radio access network, RAN) node (or device) that connects a terminal to a wireless network, and may also be referred to as a base station (base station, BS). Currently, some examples of the RAN node are a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by the CU, functions of some or all of the remaining protocol layers are distributed in the DU, and the CU centrally controls the DU. The network device may alternatively be a reader/writer device.

In systems using different radio access technologies, names of base station functions may be different. For example, the base station may be a device such as an access network device that is configured to communicate with a terminal device, or the base station may be an access point (access point, AP) in a WLAN, a base station (base transceiver station, BTS) in a GSM or CDMA, a base station (NodeB, NB) in WCDMA, a gNB in a new radio (new radio, NR) system, an evolved NodeB (evolved NodeB, eNB or eNodeB) in LTE, a relay station, an access point, a vehicle-mounted device, a wearable device, an access network device (radio access network, RAN) in a future 5G network, an access network device in a future evolved PLMN network, or the like.

In addition, in embodiments of this application, a wireless communication system usually includes cells, each cell includes a base station, and the base station provides a communication service for a plurality of terminal devices. The base station includes a baseband unit (baseband unit, BBU) and a remote radio unit (remote radio unit, RRU). The BBU and RRU may be placed in different places or in a same equipment room. For example, the RRU is remotely placed in a high-traffic area, and the BBU is placed in a central equipment room. The RRU and the BBU may alternatively be different parts in a same rack. The terminal device communicates with the base station by using a transmission resource (for example, a frequency domain resource or a spectrum resource) used by the cell. The base station may be a base station that supports data transmission by receiving or transmitting communication, or may be a base station that supports sending of a wakeup signal. The cell may be a cell corresponding to the base station. The base station may be a macro base station, a micro base station, a small cell, or a pole station. The cell may belong to a macro base station, or may belong to a base station corresponding to a small cell (small cell). The small cell herein may include a metro cell (metro cell), a micro cell (micro cell), a pico cell (pico cell), a femto cell (femto cell), or the like. These small cells have characteristics of a small coverage area and low transmit power, and are applicable to providing a high-rate data transmission service.

In embodiments of this application, the terminal device or the network device includes a hardware layer, an operating system layer running above the hardware layer, and an application layer running above the operating system layer. The hardware layer includes hardware such as a central processing unit (Central Processing Unit, CPU), a memory management unit (Memory Management Unit, MMU), and a memory (which is also referred to as a main memory). An operating system may be any one or more computer operating systems that implement service processing through a process (Process), for example, a Linux operating system, a Unix operating system, an Android operating system, an iOS operating system, or a Windows operating system. The application layer includes applications such as a browser, a contacts application, text processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features in embodiments of this application may be implemented as a method, an apparatus, or a product that uses standard programming and/or engineering technologies. The term "product" used in this application covers a computer program that can be accessed from any computer-readable device, carrier, or medium. For example, the computer-readable medium may include but is not limited to a magnetic storage device (for example, a hard disk, a floppy disk, or a magnetic tape), an optical disc (for example, a compact disc (Compact Disc, CD) or a digital versatile disc (Digital Versatile Disc, DVD)), or a smart card and a flash memory device (for example, an erasable programmable read-only memory (Erasable Programmable Read-Only Memory, EPROM), a card, a stick, or a key drive). In addition, various storage media described in this specification may represent one or more devices and/or other machine-readable media configured to store information. The term "machine-readable media" may include but is not limited to a radio channel, and various other media that can store, include, and/or carry instructions and/or data.

It should be noted that in embodiments of this application, a plurality of application programs may be run at the application layer. In this case, an application program for performing the communication method in embodiments of this application and an application program used to control a receiving end device to complete an action corresponding to received data may be different application programs.

With rapid development of IoT technologies, interconnection of all things gradually becomes a reality. However, a battery life problem of IoT terminal devices results in a great increase in maintenance difficulty and maintenance costs of the terminal devices, and becomes a major bottleneck restricting IoT development. Therefore, IoT terminal devices that do not depend on batteries for power supply are an important evolution trend of a next-generation IoT. A passive internet of things (passive IoT) is a cellular internet of things communication technology that supports battery-free terminals.

Usually, in an internet of things system, tags may be classified into an active tag (active tag), a passive tag (passive tag), and a semi-passive tag (semi-passive tag) based on different power supply modes of the tags. The active tag includes a built-in battery, and the active tag may generate a carrier signal and has a signal amplification capability, with power consumption estimated to be between 200 microwatts and 500 microwatts. The semi-passive tag partially depends on a battery to work, and the semi-passive tag does not generate a carrier signal but has a signal amplification capability, with power consumption estimated to be approximately 100 microwatts. The passive tag includes no built-in battery, and may rectify a radio frequency signal from another device, and use a direct current voltage output through rectification as a power supply to supply energy. The passive tag neither generates a carrier signal nor has a signal amplification capability, with power consumption that can be as low as approximately 1 microwatt. The passive tag may also be referred to as a passive internet of things (passive Internet of things, passive IoT) device. Therefore, a terminal device used in the passive internet of things may also be referred to as a passive tag (passive tag).

As an example instead of a limitation, in this application, the technical solutions of this application are described below in detail by using a base station as an example of the network device and a passive tag as an example of the terminal device.

In the passive internet of things, communication between the base station and the passive tag is usually implemented by using a backscatter communication mechanism, and a communication link includes a downlink from the base station to the passive tag and an uplink from the passive tag to the base station. The downlink from the base station to the passive tag transmits a radio frequency signal used to supply energy to the passive tag. A radio frequency energy receiver has poor sensitivity. Therefore, power of the radio frequency signal transmitted by the base station needs to be increased as much as possible, so that the base station can meet a requirement of a coverage distance.

Specifically, a widely used ultra-high frequency (ultra-high frequency, UHF) radio frequency identification (Radio Frequency Identification, RFID) system is one that relates to the backscatter communication mechanism. The base station sends a downlink radio frequency signal to the tag by using an industrial, scientific, and medical (industrial, scientific, and medical, ISM) spectrum dedicated to the typical passive UHF RFID system. The tag receives the downlink radio frequency signal sent by the base station, and sends an uplink signal to the base station by using a backscatter technology. In this manner, the base station may identify an identifier of the tag, and perform an operation such as a read/write operation on the tag. However, in the passive UHF RFID system, equivalent isotropically radiated power (equivalent isotropically radiated power, EIRP) of the radio frequency signal delivered by the base station is constrained not to exceed 36 decibel-milliwatts (dBm). In comparison, if a licensed FDD spectrum of a frequency band below 1 GHz is used, power of a radio frequency signal transmitted by the base station within a narrowband carrier bandwidth of 180 kHz may exceed 36 dBm, and EIRP may exceed 46 dBm when an antenna gain is added. Compared with that in a case of the ISM spectrum dedicated to passive UHF RFID, the power of the transmitted radio frequency signal may be increased by more than 10 dB. Therefore, in the passive internet of things, it is suitable to use the licensed FDD spectrum for energy supply between the base station and the passive tag.

In the passive internet of things, when the base station and the passive tag communicate by using the licensed FDD spectrum, the uplink and the downlink need to respectively transmit channels, signals, and the like on two frequency bands separated by tens of MHz. However, after receiving a downlink channel, a signal, and the like sent by the base station, the passive tag does not support frequency shifting for an uplink backscatter signal relative to a downlink carrier signal of FDD within a large range. Therefore, uplink data transmission cannot be implemented between the passive tag and the base station on the FDD spectrum.

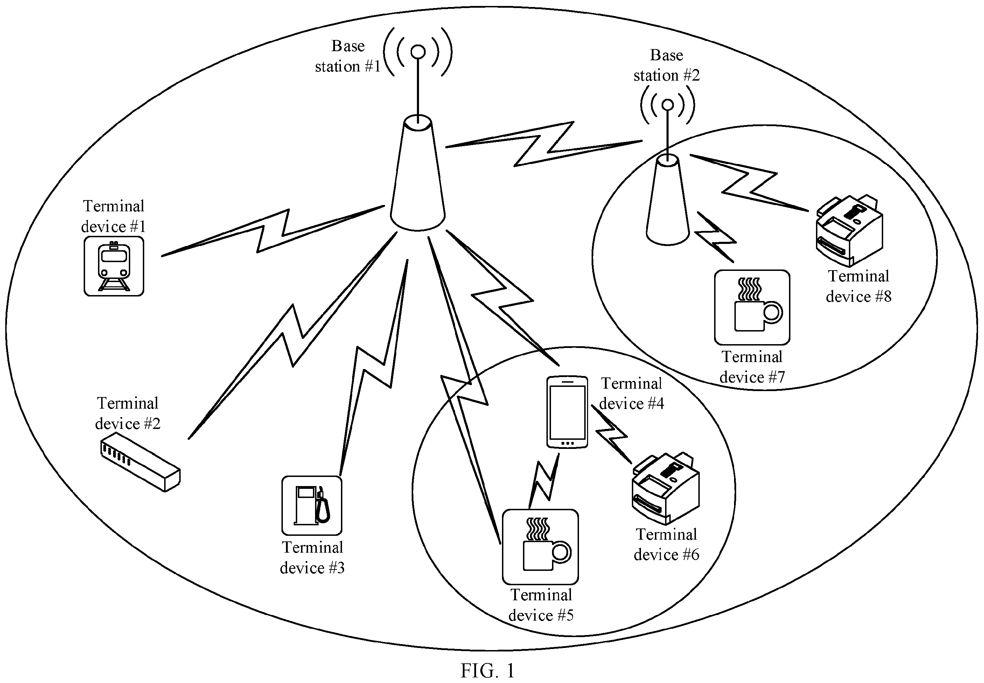

FIG. 1 is a diagram of a communication scenario applicable to an embodiment of this application. A communication system in FIG. 1 may include at least one terminal device (for example, a terminal device #1, a terminal device #2, a terminal device #3, a terminal device #4, a terminal device #5, a terminal device #6, a terminal device #7, and a terminal device #8) and at least one network device (for example, a base station #1 and a base station #2). A network device 170 is configured to provide a communication service for the terminal device and accesses a core network. The terminal device may access the network by searching for a synchronization signal, a broadcast signal, or the like sent by the network device 170, to establish communication with the network device.

The base station #1, the base station #2, the terminal device #1, the terminal device #2, the terminal device #3, the terminal device #4, the terminal device #5, the terminal device #6, the terminal device #7, and the terminal device #8 in FIG. 1 form a communication system. The base station #1 may send downlink information to at least one of the terminal device #1, the terminal device #2, the terminal device #3, the terminal device #4, the terminal device #5, and the terminal device #6. Similarly, at least one of the terminal device #1, the terminal device #2, the terminal device #3, the terminal device #4, the terminal device #5, and the terminal device #6 may send uplink information to the base station #1. The base station #1 may send downlink information to at least one of the terminal device #7 and the terminal device #8 through the base station #2. Similarly, at least one of the terminal device #7 and the terminal device #8 may send uplink information to the base station #1 through the base station #2. In addition, the terminal device #4, the terminal device #5, and the terminal device #6 may form a communication system. The terminal device #5 may send downlink information to at least one of the terminal device #4 and the terminal device #6. Similarly, at least one of the terminal device #4 and the terminal device #6 may send uplink information to the terminal device #5. In addition, the base station #2, the terminal device #7, and the terminal device #8 may form a communication system. The base station #2 may send downlink information to at least one of the terminal device #7 and the terminal device #8. Similarly, at least one of the terminal device #7 and the terminal device #8 may send uplink information to the base station #2.

It should be understood that the communication system may include one or more network devices. One network device may send information, data, and the like to one or more terminal devices. A plurality of network devices may simultaneously send information, data, and the like to one or more terminals.

It should be understood that the terminal device #1 to the terminal device #8 may be terminal devices that support backscatter communication, that is, passive tags described above, or may be terminal devices that do not support backscatter communication. This is not limited in this application.

In a passive internet of things system, a base station may send a continuous waveform including a high level to a passive tag, and after receiving energy, the tag may reflect information to the base station through a reverse link.

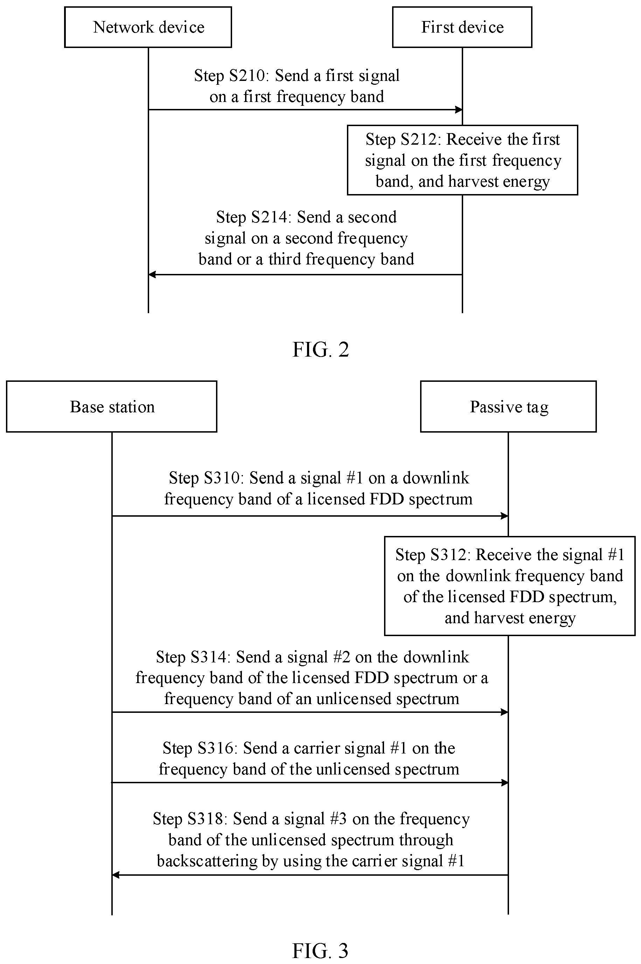

In the following, this application provides a technical solution for improving a link budget through frequency domain resource allocation, as shown in FIG. 2.

Step S210: A network device sends a first signal to a first device on a first frequency band.

Specifically, the first frequency band may be a downlink frequency band of a licensed frequency division duplex FDD spectrum, and the first signal may be used by the first device to harvest energy.

Step S212: The first device receives the first signal on the first frequency band, and harvests energy.

According to the foregoing steps, the network device may be allowed to send an energy supply signal with higher power on the downlink frequency band of the licensed FDD spectrum. Therefore, a coverage area of the network device can be expanded.

Step S214: The first device sends a second signal to the network device on a second frequency band or a third frequency band, where the second signal includes uplink data.

Specifically, the second frequency band may be an uplink frequency band of the licensed frequency division duplex FDD spectrum, and the third frequency band may be a frequency band of an unlicensed spectrum, for example, an ISM frequency band.

Specifically, the first device may send the second signal to the network device based on a request of the network device, or may actively send the second signal to the network device. This is not limited in this application.

According to the foregoing method, energy supply to the first device in as large a coverage area as possible can be ensured, and transmission of uplink data of the first device can be ensured, thereby improving an overall link budget.

To describe the technical solutions of this application in more detail, the following provides descriptions by using a base station as an example of the network device and a passive tag as an example of the first device, as shown in FIG. 3.

Step S310: The base station sends a signal #1 on a downlink frequency band of a licensed FDD spectrum, where the signal #1 is used by the passive tag to harvest energy.

Specifically, the signal #1 may be an example of the foregoing first signal.

For example, the base station may send the signal #1 to the passive tag on a frequency band of 934-954 MHz.

Optionally, step S310 may alternatively be: The base station sends the signal #1 to the passive tag on the downlink frequency band of the licensed FDD spectrum and a frequency band of an unlicensed spectrum. The frequency band of the unlicensed spectrum may be an ISM frequency band.

For example, the base station may send the signal #1 to the passive tag on the frequency band of 934-954 MHz and a frequency band of 920-925 MHz, or the base station may send the signal #1 to the passive tag on the frequency band of 934-954 MHz and a frequency band of 866-869 MHz.

Step S312: Correspondingly, the passive tag may receive the signal #1 on the downlink frequency band of the licensed FDD spectrum, and harvest energy.

The base station may be allowed to send an energy supply signal #1 with higher power on the downlink frequency band of the licensed FDD spectrum. Therefore, a coverage area of the base station can be expanded.

Specifically, the passive tag needs to use a rectifier circuit to convert radio frequency energy of the signal #1 into direct current energy. Usually, a threshold at which radio frequency energy can be converted is not less than -30 dBm, and the threshold may be understood as sensitivity of an energy transmission receiver. The radio frequency energy transmission receiver has poor sensitivity. Therefore, the threshold at which radio frequency energy can be converted is usually large.

For example, the passive tag may receive, on the frequency band of 934-954 MHz, the signal #1 sent by the base station.

Optionally, if the base station sends the signal #1 to the passive tag on the downlink frequency band of the licensed FDD spectrum and the frequency band of the unlicensed spectrum, the passive tag receives the signal #1 on the downlink frequency band of the licensed FDD spectrum and the frequency band of the unlicensed spectrum.

Optionally, there is step S314: The base station sends a signal #2 to the passive tag.

As an example instead of a limitation, the signal #2 may be a downlink physical channel, a downlink physical signal, or the like.

As an example instead of a limitation, the downlink physical channel may be a downlink control channel, a downlink data channel, a downlink broadcast channel, or the like. The downlink physical signal may be a reference signal (for example, a preamble signal, a midamble signal, or a postamble signal), a synchronization signal, a measurement signal, a calibration signal, a delimitation signal, a start signal, or the like.

Specifically, the base station may send a downlink physical channel, a downlink physical signal, or the like on the downlink frequency band of the licensed FDD spectrum, may send a downlink physical channel, a downlink physical signal, or the like on a frequency band of an unlicensed spectrum dedicated to UHF RFID, or may send a downlink physical channel, a downlink physical signal, or the like on a frequency band of an unlicensed spectrum not dedicated to UHF RFID, to improve flexibility of sending a signal by the base station and achieve high communication efficiency.

For example, the base station may send a downlink physical channel, a downlink physical signal, or the like on the frequency band of 934-954 MHz, or may send a downlink physical channel, a downlink physical signal, or the like on the frequency band of 920-925 MHz.

Correspondingly, when the base station sends a downlink physical channel, a downlink physical signal, or the like on the downlink frequency band of the licensed FDD spectrum, the passive tag receives the downlink physical channel, the downlink physical signal, or the like on the downlink frequency band of the licensed FDD spectrum, when the base station sends a downlink physical channel, a downlink physical signal, or the like on the frequency band of the unlicensed spectrum dedicated to UHF RFID, the passive tag receives the downlink physical channel, the downlink physical signal, or the like on the frequency band of the unlicensed spectrum dedicated to UHF RFID, or when the base station sends a downlink physical channel, a downlink physical signal, or the like on the frequency band of the unlicensed spectrum not dedicated to UHF RFID, the passive tag receives the downlink physical channel, the downlink physical signal, or the like on the frequency band of the unlicensed spectrum not dedicated to UHF RFID.

Optionally, there is step S316: The base station sends a carrier signal #1 on the frequency band of the unlicensed spectrum, where the carrier signal #1 is used by the passive tag to transmit an uplink signal or uplink data.

Specifically, the frequency band of the unlicensed spectrum may be the frequency band of the unlicensed spectrum dedicated to UHF RFID, or may be the frequency band of the unlicensed spectrum not dedicated to UHF RFID.

Specifically, the carrier signal #1 may be a monophonic signal or a continuous wave.

Specifically, the carrier signal #1 may be used by the passive tag to send uplink data to the base station. That the carrier signal #1 may be used by the passive tag to send uplink data to the base station may be understood as that the carrier signal #1 carries uplink data and is sent to the base station, or may be understood as that a new carrier signal generated based on the carrier signal #1 carries uplink data and is sent to the base station, or the like. This is not limited in this application.

In addition, when receiving the signal #2, the carrier signal #1, or the like sent by the base station, the passive tag may harvest energy of the signal #1.

A problem that the passive tag does not support frequency shifting when transmitting uplink data in an FDD system can be resolved by sending, by the base station, the carrier signal #1 to the passive tag.

Step S318: The passive tag sends a signal #3 to the base station on the frequency band of the unlicensed spectrum through backscattering by using the carrier signal #1, where the signal #3 includes an uplink signal or uplink data.

Specifically, the signal #3 may be an example of the foregoing second signal.

For example, the passive tag sends the signal #3 on the frequency band of 920-925 MHz or the frequency band of 866-869 MHz.

It should be noted that an execution sequence of the steps in FIG. 3 is not limited in this application.

According to the foregoing method, energy supply to the passive tag in as large a coverage area as possible can be ensured, and transmission of uplink data of the passive tag can be ensured, thereby improving an overall link budget.

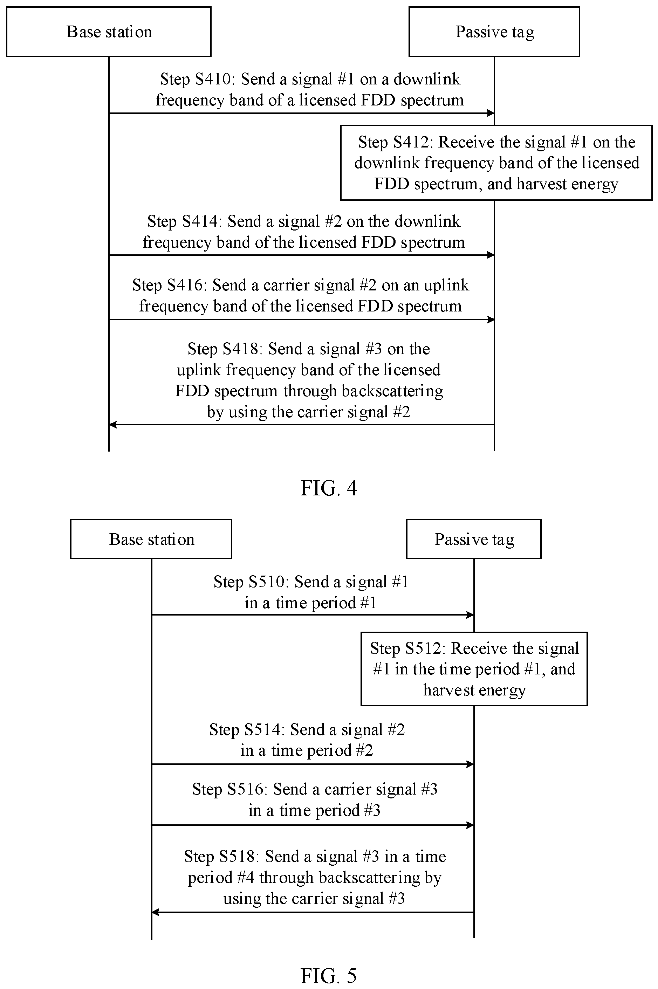

This application may further provide another technical solution for improving a link budget through frequency domain resource allocation, as shown in FIG. 4.

Step S410: A base station sends a signal #1 on a downlink frequency band of a licensed FDD spectrum, where the signal #1 is used by a passive tag to harvest energy.

Specifically, the signal #1 may be an example of the foregoing first signal.

For example, the base station may send the signal #1 to the passive tag on a frequency band of 934-954 MHz.

Optionally, step S410 may alternatively be: The base station sends the signal #1 to the passive tag on the downlink frequency band of the licensed FDD spectrum and an uplink frequency band of the licensed FDD spectrum.

For example, the base station may send the signal #1 to the passive tag on the frequency band of 934-954 MHz and a frequency band of 889-909 MHz.

Step S412: Correspondingly, the passive tag may receive the signal #1 on the downlink frequency band of the licensed FDD spectrum, and harvest energy.

The base station may be allowed to send an energy supply signal #1 with higher power on the downlink frequency band of the licensed FDD spectrum. Therefore, a coverage area of the base station can be expanded.

Specifically, the passive tag needs to use a rectifier circuit to convert radio frequency energy of the signal #1 into direct current energy. Usually, a threshold at which radio frequency energy can be converted is not less than -30 dBm, and the threshold may be understood as sensitivity of an energy transmission receiver. The radio frequency energy transmission receiver has poor sensitivity. Therefore, the threshold at which radio frequency energy can be converted is usually large.

For example, the passive tag may receive, on the frequency band of 934-954 MHz, the signal #1 sent by the base station.

Optionally, if the base station sends the signal #1 to the passive tag on the downlink frequency band of the licensed FDD spectrum and the uplink frequency band of the licensed FDD spectrum, the passive tag receives the signal #1 on the downlink frequency band of the licensed FDD spectrum and the uplink frequency band of the licensed FDD spectrum.

Step S414: The base station sends a signal #2 to the passive tag on the downlink frequency band of the licensed FDD spectrum. The signal #2 may be a downlink physical channel, a downlink physical signal, or the like.

As an example instead of a limitation, the downlink physical channel may be a downlink control channel, a downlink data channel, a downlink broadcast channel, or the like. The downlink physical signal may be a reference signal (for example, a preamble signal, a midamble signal, or a postamble signal), a synchronization signal, a measurement signal, a calibration signal, a delimitation signal, a start signal, or the like.

For example, the base station may send a downlink physical channel, a downlink physical signal, or the like on the frequency band of 934-954 MHz.

Correspondingly, when the base station sends a downlink physical channel, a downlink physical signal, or the like on the downlink frequency band of the licensed FDD spectrum, the passive tag receives the downlink physical channel, the downlink physical signal, or the like on the downlink frequency band of the licensed FDD spectrum.

Optionally, there is step S416: The base station sends a carrier signal #2 on the uplink frequency band of the licensed FDD spectrum, where the carrier signal #2 is used by the passive tag to transmit an uplink signal or uplink data.

Specifically, power of the carrier signal #2 sent by the base station may be less than power of the signal #1 or the signal #2.

For example, the base station may send the carrier signal #2 on the frequency band of 889-909 MHz. Specifically, the carrier signal #2 may be a monophonic signal or a continuous wave.

Specifically, the carrier signal #2 may be used by the passive tag to send uplink data to the base station. That the carrier signal #2 may be used by the passive tag to send uplink data to the base station may be understood as that the carrier signal #2 carries uplink data and is sent to the base station, or may be understood as that a new carrier signal generated based on the carrier signal #2 carries uplink data and is sent to the base station, or the like. This is not limited in this application.

In addition, when receiving the signal #2, the carrier signal #2, or the like sent by the base station, the passive tag may harvest energy of the signal #1.

Step S418: The passive tag sends a signal #3 on the uplink frequency band of the licensed FDD spectrum through backscattering by using the carrier signal #2, where the signal #3 includes an uplink signal or uplink data.

Specifically, the signal #3 may be an example of the foregoing second signal.

For example, the passive tag may send the uplink data on the frequency band of 889-909 MHz.

Correspondingly, power of the sent signal #3 is positively correlated with the power of the carrier signal #2 sent by the base station. That is, higher power of the carrier signal #2 sent by the base station indicates higher power of the signal #3 sent by the passive tag; and lower power of the carrier signal #2 sent by the base station indicates lower power of the signal #3 sent by the passive tag.

If the power of the signal #3 received by the base station on the uplink frequency band of the licensed FDD spectrum is excessively high, a specific degree of blocking is caused to the base station. By using the method in which the base station controls the power of the sent downlink carrier signal #2, blocking interference of the base station can be reduced, and a modification made to hardware due to interference cancellation or interference suppression performed on a base station side can be avoided.

In another implementation, when all of the signal #1, the signal #2, the signal #3, the carrier signal #1, the carrier signal #2, and the like are sent on a frequency band of an ISM spectrum, power of the carrier signal #1 or the carrier signal #2 sent by the base station may also be controlled to be less than power of the signal #1 sent by the base station, to avoid a modification made to hardware due to interference cancellation or interference suppression performed on a base station side.

In addition to cases that are provided in FIG. 3 and FIG. 4 and in which the frequency band of the licensed FDD spectrum can be used to ensure energy supply to the passive tag in as large a coverage area as possible, transmission of the uplink data of the passive tag, and the like, the technical solutions of this application may be further applied to a TDD system, as shown in FIG. 5. Specifically, a specific frequency used in the TDD system may be a licensed frequency band. This is not limited in this application.

Step S510: A base station sends a signal #1 in a time period #1, where the signal #1 is used by a passive tag to harvest energy.

Specifically, the signal #1 may be an example of the foregoing first signal.

Specifically, the time period #1 may be a downlink time period of the TDD system.

Step S512: Correspondingly, the passive tag may receive the signal #1 in the time period #1, and harvest energy.

Specifically, the passive tag needs to use a rectifier circuit to convert radio frequency energy of the signal #1 into direct current energy. Usually, a threshold at which radio frequency energy can be converted is not less than -30 dBm, and the threshold may be understood as sensitivity of an energy transmission receiver. The radio frequency energy transmission receiver has poor sensitivity. Therefore, the threshold at which radio frequency energy can be converted is usually large.

The base station may send an energy supply signal #1 with higher power on a frequency band of a licensed spectrum of TDD. Therefore, a coverage area of the base station can be expanded.

Optionally, there is step S514: The base station sends a signal #2 in a time period #2. The signal #2 may include a downlink physical channel, a downlink physical signal, or the like.

As an example instead of a limitation, the downlink physical channel may be a downlink control channel, a downlink data channel, a downlink broadcast channel, or the like. The downlink physical signal may be a reference signal (for example, a preamble signal, a midamble signal, or a postamble signal), a synchronization signal, a measurement signal, a calibration signal, a delimitation signal, a start signal, or the like.

Specifically, the time period #2 may be a downlink time period of the TDD system.

Specifically, the time period #1 and the time period #2 may be considered as a same time period.

Correspondingly, when the base station sends the signal #2 in the time period #2, the passive tag receives the signal #2 in the time period #2.

Optionally, there is step S516: The base station sends a carrier signal #3 in a time period #3, where the carrier signal #3 is used by the passive tag to transmit an uplink signal or uplink data.

Specifically, the carrier signal #3 may be a monophonic signal or a continuous wave.

Specifically, the carrier signal #3 may be used by the passive tag to send uplink data to the base station. That the carrier signal #3 may be used by the passive tag to send uplink data to the base station may be understood as that the carrier signal #3 carries uplink data and is sent to the base station, or may be understood as that a new carrier signal generated based on the carrier signal #3 carries uplink data and is sent to the base station, or the like. This is not limited in this application.

Specifically, power of the carrier signal #3 transmitted by the base station may be less than power of the signal #1 sent by the base station, or power of the carrier signal #3 transmitted by the base station may be less than power of the signal #2 sent by the base station.

In addition, when receiving the signal #2, the carrier signal #3, or the like sent by the base station, the passive tag may harvest energy of the signal #1.

Step S518: The passive tag sends a signal #3 to the base station in a time period #4 through backscattering by using the carrier signal #3, where the signal #3 includes an uplink signal or uplink data.

Specifically, the signal #3 may be an example of the foregoing second signal.

Specifically, the time period #3 and the time period #4 may be a same time period.

According to the foregoing method, the coverage area of the base station can be expanded by increasing the transmit power of the signal #1, and blocking interference on a base station side can be reduced by decreasing the transmit power of the carrier signal, to reduce a modification to hardware.

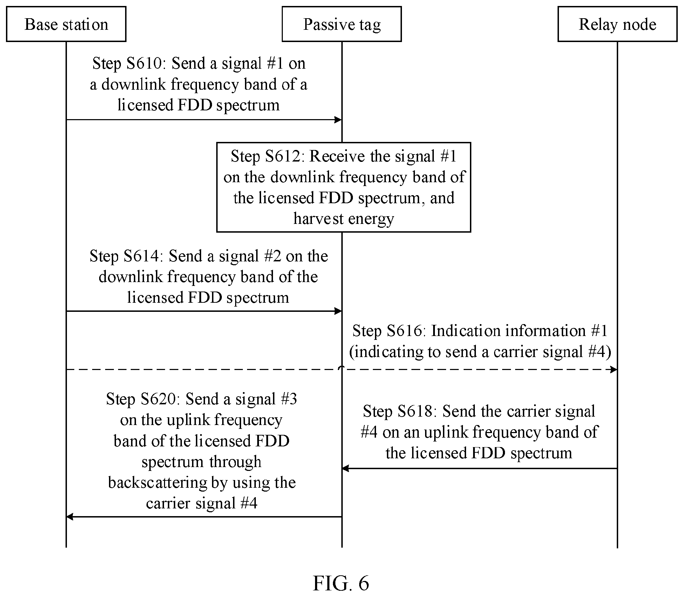

This application may further provide another technical solution for improving, by a passive tag, a link budget by using a licensed FDD spectrum, as shown in FIG. 6.

Step S610: A base station sends a signal #1 on a downlink frequency band of the licensed FDD spectrum, where the signal #1 is used by the passive tag to harvest energy.

Specifically, the signal #1 may be an example of the foregoing first signal.

For example, the base station may send the signal #1 to the passive tag on a frequency band of 934-954 MHz.

Optionally, step S610 may alternatively be: The base station sends the signal #1 to the passive tag on the downlink frequency band of the licensed FDD spectrum and an uplink frequency band of the licensed FDD spectrum.

For example, the base station sends the signal #1 to the passive tag on the frequency band of 934-954 MHz and a frequency band of 889-909 MHz.

Step S612: Correspondingly, the passive tag may receive the signal #1 on the downlink frequency band of the licensed FDD spectrum, and harvest energy.

Optionally, if the base station sends the signal #1 to the passive tag on the downlink frequency band of the licensed FDD spectrum and the uplink frequency band of the licensed FDD spectrum, the passive tag may receive the signal #1 on the downlink frequency band of the licensed FDD spectrum and the uplink frequency band of the licensed FDD spectrum.

Specifically, the passive tag needs to use a rectifier circuit to convert radio frequency energy of the signal #1 into direct current energy. Usually, a threshold at which radio frequency energy can be converted is not less than -30 dBm, and the threshold may be understood as sensitivity of an energy transmission receiver. The radio frequency energy transmission receiver has poor sensitivity. Therefore, the threshold at which radio frequency energy can be converted is usually large.

For example, the passive tag may receive, on the frequency band of 934-954 MHz, the signal #1 sent by the base station.

Optionally, there is step S614: The base station sends a signal #2 or the like to the passive tag on the downlink frequency band of the licensed FDD spectrum. The signal #2 may include a downlink physical channel, a downlink physical signal, or the like.

As an example instead of a limitation, the downlink physical channel may be a downlink control channel, a downlink data channel, a downlink broadcast channel, or the like. The downlink physical signal may be a reference signal (for example, a preamble signal, a midamble signal, or a postamble signal), a synchronization signal, a measurement signal, a calibration signal, a delimitation signal, a start signal, or the like. For example, the base station may send the signal #2 on the frequency band of 934-954 MHz.

Correspondingly, when the base station sends the signal #2 on the downlink frequency band of the licensed FDD spectrum, the passive tag receives the signal #2 on the downlink frequency band of the licensed FDD spectrum.

Optionally, there is step S616: The base station sends indication information #1 to a relay node, where the indication information #1 indicates an NR terminal device or CPE to send a carrier signal #4 to the passive tag.

Specifically, the indication information #1 includes information such as a start moment for sending the carrier signal #4, duration for sending the carrier signal #4, and power for sending the carrier signal #4.

Specifically, the relay node may be an example of the second device or the third device in this application. For example, the relay node may be an auxiliary NR terminal device, customer premises equipment/customer premises equipment (customer premises equipment, CPE), a handheld terminal, or the like. This is not limited in this application. Specifically, the CPE may be a device directly connected to a network.

The indication information #1 includes the foregoing information, so that sending of the carrier signal #4 can be accurately controlled.

Optionally, there is step S618: The relay node sends the carrier signal #4 on the uplink frequency band of the licensed FDD spectrum, where the carrier signal #4 is used by the passive tag to transmit an uplink signal or uplink data.

Specifically, the carrier signal #4 may be a monophonic signal or a continuous wave.

Specifically, the carrier signal #4 may be used by the passive tag to send uplink data to the base station. That the carrier signal #4 may be used by the passive tag to send uplink data to the base station may be understood as that the carrier signal #4 carries uplink data and is sent to the base station, or may be understood as that a new carrier signal generated based on the carrier signal #4 carries uplink data and is sent to the base station, or the like. This is not limited in this application.

In addition, when receiving the signal #2 sent by the base station, the carrier signal #4 sent by the relay node, or the like, the passive tag may harvest energy of the signal #1.

For example, the relay node may send the carrier signal #4 on the frequency band of 889-909 MHz.

A problem that the passive tag does not support frequency shifting when transmitting uplink data in an FDD system can be resolved by sending, by the relay node, the carrier signal #4 to the passive tag.

Step S620: The passive tag sends a signal #3 to the base station on the uplink frequency band of the licensed FDD spectrum through backscattering by using the carrier signal #4, where the signal #3 includes an uplink signal or uplink data.

Specifically, the signal #3 may be an example of the foregoing second signal.

For example, the passive tag sends the carrier signal #4 on the frequency band of 889-909 MHz.

According to the foregoing method, energy supply to the passive tag in as large a coverage area as possible can be ensured, and transmission of uplink data of the passive tag can be ensured, thereby improving an overall link budget.

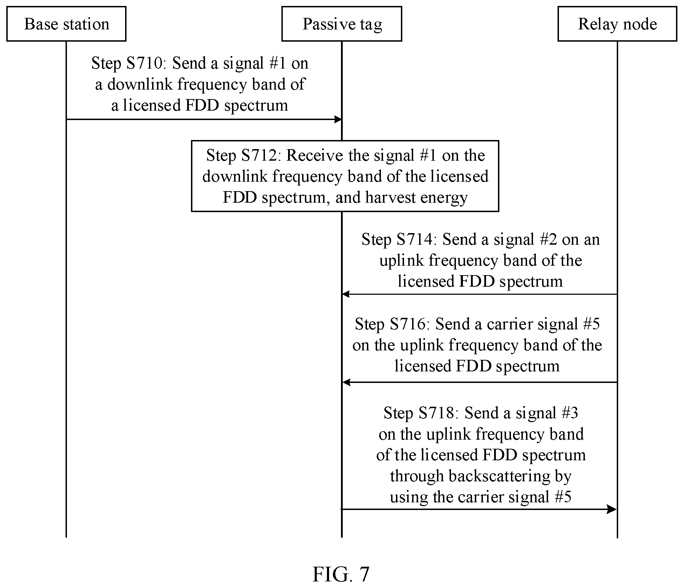

This application may further provide another technical solution for improving, by a passive tag, a link budget by using a licensed FDD spectrum, as shown in FIG. 7.

Step S710: A base station sends a signal #1 on a downlink frequency band of the licensed FDD spectrum, where the signal #1 is used by the passive tag to harvest energy.

Specifically, the signal #1 may be an example of the foregoing first signal.

For example, the base station may send the signal #1 to the passive tag on a frequency band of 934-954 MHz.

Optionally, step S710 may alternatively be: The base station sends the signal #1 to the passive tag on the downlink frequency band of the licensed FDD spectrum and a second frequency band. The second frequency band may be an uplink frequency band of the FDD spectrum.

For example, the base station sends the signal #1 to the passive tag on the downlink frequency band of the FDD spectrum and the uplink frequency band of the FDD spectrum.

Step S712: Correspondingly, the passive tag may receive the signal #1 on the downlink frequency band of the licensed FDD spectrum, and harvest energy.

Specifically, the passive tag needs to use a rectifier circuit to convert radio frequency energy of the signal #1 into direct current energy. Usually, a threshold at which radio frequency energy can be converted is not less than -30 dBm, and the threshold may be understood as sensitivity of an energy transmission receiver. The radio frequency energy transmission receiver has poor sensitivity. Therefore, the threshold at which radio frequency energy can be converted is usually large.

For example, the passive tag may receive, on the frequency band of 934-954 MHz, the signal #1 sent by the base station.

Optionally, if the base station sends the signal #1 to the passive tag on the downlink frequency band of the licensed FDD spectrum and the uplink frequency band of the FDD spectrum, the passive tag may receive the signal #1 on the downlink frequency band of the licensed FDD spectrum and the uplink frequency band of the FDD spectrum.

For example, the passive tag may receive, on the frequency band of 934-954 MHz and a frequency band of 889-909 MHz, the signal #1 sent by the base station.

Step S714: A relay node sends a signal #2 or the like to the passive tag on the uplink frequency band of the licensed FDD spectrum. The signal #2 may include a downlink physical channel, a downlink physical signal, or the like.

As an example instead of a limitation, the downlink physical channel may be a downlink control channel, a downlink data channel, a downlink broadcast channel, or the like. The downlink physical signal may be a reference signal (for example, a preamble signal, a midamble signal, or a postamble signal), a synchronization signal, a measurement signal, a calibration signal, a delimitation signal, a start signal, or the like. For example, the relay node may send the signal #2 on the frequency band of 889-909 MHz.

Specifically, the relay node may be an example of the second device or the third device in this application. For example, the relay node may be an auxiliary NR terminal device, CPE, a handheld terminal, or the like. This is not limited in this application.

Correspondingly, when the relay node sends the signal #2 on the uplink frequency band of the licensed FDD spectrum, the passive tag receives the signal #2 on the uplink frequency band of the licensed FDD spectrum.

Step S716: The relay node sends a carrier signal #5 on the uplink frequency band of the licensed FDD spectrum, where the carrier signal #5 is used by the passive tag to transmit an uplink signal or uplink data.

Specifically, power of the carrier signal #5 sent by the relay node may be less than power of the sent signal #2. Specifically, the carrier signal #5 may be a monophonic signal or a continuous wave.

Specifically, the carrier signal #5 may be used by the passive tag to send uplink data to the relay node. That the carrier signal #5 may be used by the passive tag to send uplink data to the relay node may be understood as that the carrier signal #5 carries uplink data and is sent to the relay node, or may be understood as that a new carrier signal generated based on the carrier signal #5 carries uplink data and is sent to the relay node, or the like. This is not limited in this application.

In addition, when receiving the signal #2 sent by the relay node, the carrier signal #5 sent by the relay node, or the like, the passive tag may harvest energy of the signal #1.

For example, the relay node may send the carrier signal #5 on the frequency band of 889-909 MHz.

A problem that the passive tag does not support frequency shifting when transmitting uplink data in an FDD system can be resolved by sending, by the relay node, the carrier signal #5 to the passive tag.

Step S718: The passive tag sends a signal #3 to the relay node on the uplink frequency band of the licensed FDD spectrum through backscattering by using the carrier signal #5, where the signal #3 includes an uplink signal or uplink data.

Specifically, the signal #3 may be an example of the foregoing second signal.

For example, the passive tag sends the signal #3 on the frequency band of 889-909 MHz.

Correspondingly, power of the signal #3 sent by the passive tag is positively correlated with the power of the carrier signal #5 sent by the relay node. That is, higher power of the carrier signal #5 sent by the relay node indicates higher power of the signal #3 sent by the passive tag; and lower power of the carrier signal #5 sent by the relay node indicates lower power of the signal #3 sent by the passive tag.

According to the foregoing method, energy supply to the passive tag in as large a coverage area as possible can be ensured, and transmission of uplink data of the passive tag can be ensured, thereby improving an overall link budget.

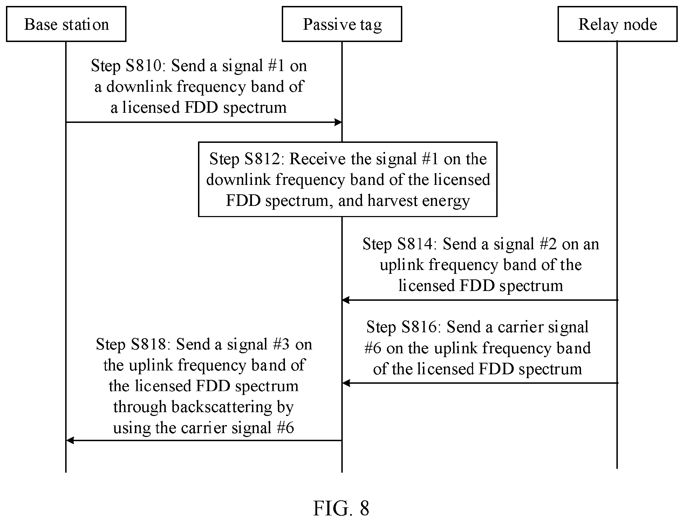

This application may further provide another technical solution for improving, by a passive tag, a link budget by using a licensed FDD spectrum, as shown in FIG. 8.

Step S810: A base station sends a signal #1 on a downlink frequency band of the licensed FDD spectrum, where the signal #1 is used by the passive tag to harvest energy.

Specifically, the signal #1 may be an example of the foregoing first signal.

For example, the base station may send the signal #1 to the passive tag on a frequency band of 934-954 MHz.

Optionally, step S810 may alternatively be: The base station sends the signal #1 to the passive tag on the downlink frequency band of the licensed FDD spectrum and a second frequency band. The second frequency band may be an uplink frequency band of the FDD spectrum.

For example, the base station sends the signal #1 to the passive tag on the downlink frequency band of the FDD spectrum and the uplink frequency band of the FDD spectrum.

Step S812: Correspondingly, the passive tag may receive the signal #1 on the downlink frequency band of the licensed FDD spectrum, and harvest energy.

Specifically, the passive tag needs to use a rectifier circuit to convert radio frequency energy of the signal #1 into direct current energy. Usually, a threshold at which radio frequency energy can be converted is not less than -30 dBm, and the threshold may be understood as sensitivity of an energy transmission receiver. The radio frequency energy transmission receiver has poor sensitivity. Therefore, the threshold at which radio frequency energy can be converted is usually large.

For example, the passive tag may receive, on the frequency band of 934-954 MHz, the signal #1 sent by the base station.

Optionally, if the base station sends the signal #1 to the passive tag on the downlink frequency band of the licensed FDD spectrum and the uplink frequency band of the FDD spectrum, the passive tag may receive the signal #1 on the downlink frequency band of the licensed FDD spectrum and the uplink frequency band of the FDD spectrum.

For example, the passive tag may receive, on the frequency band of 934-954 MHz and a frequency band of 889-909 MHz, the signal #1 sent by the base station.

Step S814: A relay node sends a signal #2 or the like to the passive tag on the uplink frequency band of the licensed FDD spectrum. The signal #2 may include a downlink physical channel, a downlink physical signal, or the like.

As an example instead of a limitation, the downlink physical channel may be a downlink control channel, a downlink data channel, a downlink broadcast channel, or the like. The downlink physical signal may be a reference signal (for example, a preamble signal, a midamble signal, or a postamble signal), a synchronization signal, a measurement signal, a calibration signal, a delimitation signal, a start signal, or the like. For example, the relay node may send the signal #2 on the frequency band of 889-909 MHz.

Specifically, the relay node may be an example of the second device or the third device in this application. For example, the relay node may be an auxiliary NR terminal device, CPE, a handheld terminal, or the like. This is not limited in this application.

Correspondingly, when the relay node sends the signal #2 on the uplink frequency band of the licensed FDD spectrum, the passive tag receives the signal #2 on the uplink frequency band of the licensed FDD spectrum.

Step S816: The relay node sends a carrier signal #6 on the uplink frequency band of the licensed FDD spectrum, where the carrier signal #6 is used by the passive tag to transmit an uplink signal or uplink data.

Specifically, the carrier signal #6 may be a monophonic signal or a continuous wave.

Specifically, the carrier signal #6 may be used by the passive tag to send uplink data to the base station. That the carrier signal #6 may be used by the passive tag to send uplink data to the base station may be understood as that the carrier signal #6 carries uplink data and is sent to the base station, or may be understood as that a new carrier signal generated based on the carrier signal #6 carries uplink data and is sent to the base station, or the like. This is not limited in this application.

In addition, when receiving the signal #2 sent by the relay node, the carrier signal #6 sent by the relay node, or the like, the passive tag may harvest energy of the signal #1.

For example, the relay node may send the carrier signal #6 on the frequency band of 889-909 MHz.

A problem that the passive tag does not support frequency shifting when transmitting uplink data in an FDD system can be resolved by sending, by the relay node, the carrier signal #6 to the passive tag.

Step S818: The passive tag sends a signal #3 to the base station on the uplink frequency band of the licensed FDD spectrum through backscattering by using the carrier signal #6, where the signal #3 includes an uplink signal or uplink data.

Specifically, the signal #3 may be an example of the foregoing second signal.

For example, the passive tag sends the signal #3 on the frequency band of 889-909 MHz.

Correspondingly, power of the signal #3 sent by the passive tag is positively correlated with power of the carrier signal #6 sent by the relay node. That is, higher power of the carrier signal #6 sent by the relay node indicates higher power of the signal #3 sent by the passive tag; and lower power of the carrier signal #6 sent by the relay node indicates lower power of the signal #3 sent by the passive tag.

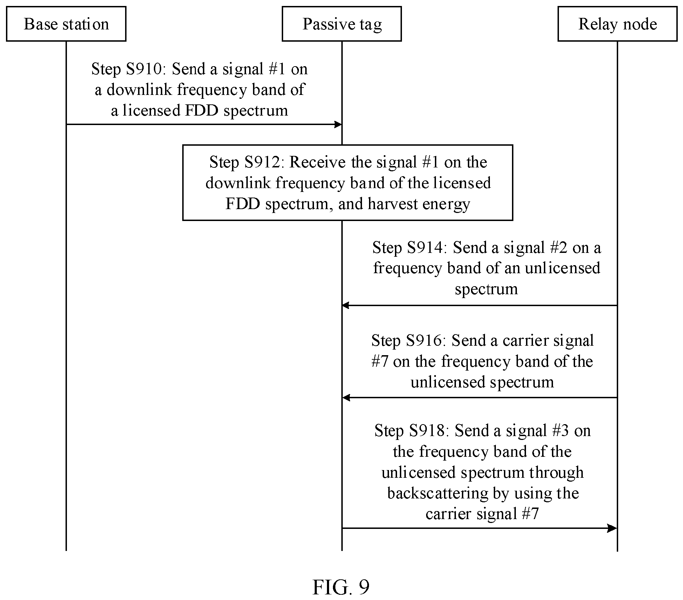

According to the foregoing method, energy supply to the passive tag in as large a coverage area as possible can be ensured, and transmission of uplink data of the passive tag can be ensured, thereby improving an overall link budget. This application may further provide another technical solution for improving, by a passive tag, a link budget by using a licensed FDD spectrum, as shown in FIG. 9.

Step S910: A base station sends a signal #1 on a downlink frequency band of the licensed FDD spectrum, where the signal #1 is used by the passive tag to harvest energy.

Specifically, the signal #1 may be an example of the foregoing first signal.

For example, the base station may send the signal #1 to the passive tag on a frequency band of 934-954 MHz. Optionally, step S910 may alternatively be: The base station sends the signal #1 to the passive tag on the downlink frequency band of the licensed FDD spectrum and a third frequency band. The third frequency band may be a frequency band of an unlicensed spectrum, for example, an ISM frequency band.

For example, the base station sends the signal #1 to the passive tag on the downlink frequency band of the FDD spectrum and the ISM frequency band.

Step S912: Correspondingly, the passive tag may receive the signal #1 on the downlink frequency band of the licensed FDD spectrum, and harvest energy.

Specifically, the passive tag needs to use a rectifier circuit to convert radio frequency energy of the signal #1 into direct current energy. Usually, a threshold at which radio frequency energy can be converted is not less than -30 dBm, and the threshold may be understood as sensitivity of an energy transmission receiver. The radio frequency energy transmission receiver has poor sensitivity. Therefore, the threshold at which radio frequency energy can be converted is usually large.

For example, the passive tag may receive, on the frequency band of 934-954 MHz, the signal #1 sent by the base station.

Optionally, if the base station sends the signal #1 to the passive tag on the downlink frequency band of the licensed FDD spectrum and the ISM frequency band, the passive tag may receive the signal #1 on the downlink frequency band of the licensed FDD spectrum and the ISM frequency band.

For example, the passive tag may receive, on the frequency band of 934-954 MHz and a frequency band of 920-925 MHz, the signal #1 sent by the base station, or the passive tag may receive, on the frequency band of 934-954 MHz and a frequency band of 866-869 MHz, the signal #1 sent by the base station.

Step S914: A relay node sends a signal #2 or the like to the passive tag on the frequency band of the unlicensed spectrum. The signal #2 may include a downlink physical channel, a downlink physical signal, or the like.

As an example instead of a limitation, the downlink physical channel may be a downlink control channel, a downlink data channel, a downlink broadcast channel, or the like. The downlink physical signal may be a reference signal (for example, a preamble signal, a midamble signal, or a postamble signal), a synchronization signal, a measurement signal, a calibration signal, a delimitation signal, a start signal, or the like. For example, the relay node may send the signal #2 on the frequency band of 920-925 MHz or the frequency band of 866-869 MHz.

Specifically, the relay node may be an example of the third device in this application. For example, the relay node may be a handheld terminal or the like. This is not limited in this application.

Correspondingly, when the relay node sends the signal #2 on the frequency band of the unlicensed spectrum, the passive tag receives the signal #2 on the frequency band of the unlicensed spectrum.

Step S916: The relay node sends a carrier signal #7 on the frequency band of the unlicensed spectrum, where the carrier signal #7 is used by the passive tag to transmit an uplink signal or uplink data.

Specifically, power of the carrier signal #7 sent by the relay node may be less than power of the sent signal #2. Specifically, the carrier signal #7 may be a monophonic signal or a continuous wave.

Specifically, the carrier signal #7 may be used by the passive tag to send uplink data to the relay node. That the carrier signal #7 may be used by the passive tag to send uplink data to the relay node may be understood as that the carrier signal #7 carries uplink data and is sent to the relay node, or may be understood as that a new carrier signal generated based on the carrier signal #7 carries uplink data and is sent to the relay node, or the like. This is not limited in this application.

In addition, when receiving the signal #2 sent by the relay node, the carrier signal #7 sent by the relay node, or the like, the passive tag may harvest energy of the signal #1.

For example, the relay node may send the carrier signal #7 on the frequency band of 920-925 MHz or the frequency band of 866-869 MHz.

A problem that the passive tag does not support frequency shifting when transmitting uplink data in an FDD system can be resolved by sending, by the relay node, the carrier signal #7 to the passive tag.

Step S918: The passive tag sends a signal #3 to the relay node on the frequency band of the unlicensed spectrum through backscattering by using the carrier signal #7, where the signal #3 includes an uplink signal or uplink data.

Specifically, the signal #3 may be an example of the foregoing second signal.

For example, the passive tag sends the signal #3 on the frequency band of 920-925 MHz or the frequency band of 866-869 MHz.

Correspondingly, power of the signal #3 sent by the passive tag is positively correlated with the power of the carrier signal #7 sent by the relay node. That is, higher power of the carrier signal #7 sent by the relay node indicates higher power of the signal #3 sent by the passive tag; and lower power of the carrier signal #7 sent by the relay node indicates lower power of the signal #3 sent by the passive tag.

According to the foregoing method, energy supply to the passive tag in as large a coverage area as possible can be ensured, and transmission of uplink data of the passive tag can be ensured, thereby improving an overall link budget.

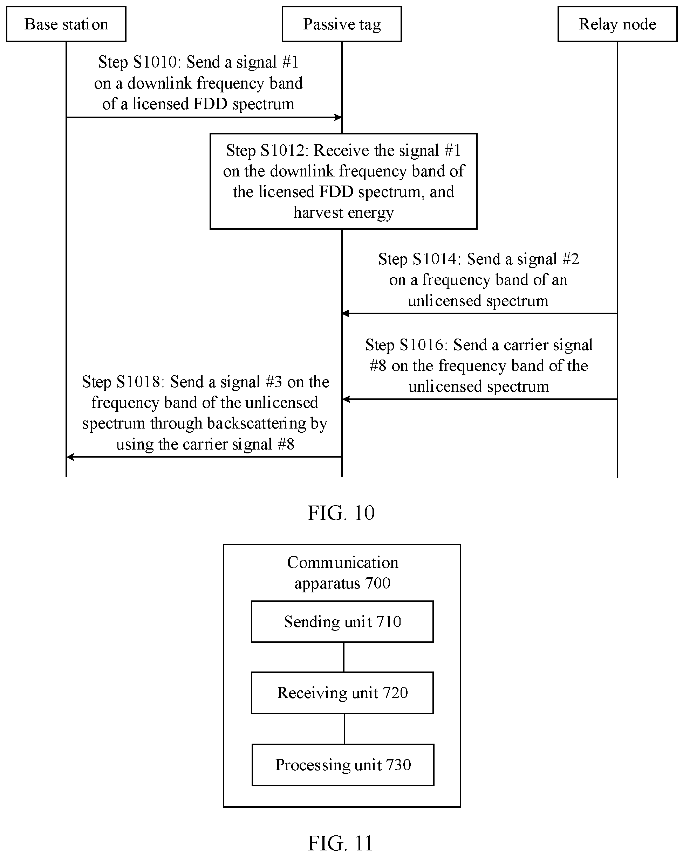

This application may further provide another technical solution for improving, by a passive tag, a link budget by using a licensed FDD spectrum, as shown in FIG. 10.

Step S1010: A base station sends a signal #1 on a downlink frequency band of the licensed FDD spectrum, where the signal #1 is used by the passive tag to harvest energy.

Specifically, the signal #1 may be an example of the foregoing first signal.

For example, the base station may send the signal #1 to the passive tag on a frequency band of 934-954 MHz.

Optionally, step S910 may alternatively be: The base station sends the signal #1 to the passive tag on the downlink frequency band of the licensed FDD spectrum and a third frequency band. The third frequency band may be a frequency band of an unlicensed spectrum, for example, an ISM frequency band.

For example, the base station sends the signal #1 to the passive tag on the downlink frequency band of the FDD spectrum and the ISM frequency band.

Step S1012: Correspondingly, the passive tag may receive the signal #1 on the downlink frequency band of the licensed FDD spectrum, and harvest energy.

Specifically, the passive tag needs to use a rectifier circuit to convert radio frequency energy of the signal #1 into direct current energy. Usually, a threshold at which radio frequency energy can be converted is not less than -30 dBm, and the threshold may be understood as sensitivity of an energy transmission receiver. The radio frequency energy transmission receiver has poor sensitivity. Therefore, the threshold at which radio frequency energy can be converted is usually large.

For example, the passive tag may receive, on the frequency band of 934-954 MHz, the signal #1 sent by the base station.

Optionally, if the base station sends the signal #1 to the passive tag on the downlink frequency band of the licensed FDD spectrum and the ISM frequency band, the passive tag may receive the signal #1 on the downlink frequency band of the licensed FDD spectrum and the ISM frequency band.

For example, the passive tag may receive, on the frequency band of 934-954 MHz and a frequency band of 920-925 MHz, the signal #1 sent by the base station, or the passive tag may receive, on the frequency band of 934-954 MHz and a frequency band of 866-869 MHz, the signal #1 sent by the base station.

Step S1014: A relay node sends a signal #2 or the like to the passive tag on the frequency band of the unlicensed spectrum. The signal #2 may include a downlink physical channel, a downlink physical signal, or the like.

As an example instead of a limitation, the downlink physical channel may be a downlink control channel, a downlink data channel, a downlink broadcast channel, or the like. The downlink physical signal may be a reference signal (for example, a preamble signal, a midamble signal, or a postamble signal), a synchronization signal, a measurement signal, a calibration signal, a delimitation signal, a start signal, or the like. For example, the relay node may send the signal #2 on the frequency band of 934-954 MHz and the frequency band of 920-925 MHz.

Specifically, the relay node may be an example of the third device in this application. For example, the relay node may be a handheld terminal or the like. This is not limited in this application.

Correspondingly, when the relay node sends the signal #2 on the frequency band of the unlicensed spectrum, the passive tag receives the signal #2 on the frequency band of the unlicensed spectrum.

Step S1016: The relay node sends a carrier signal #8 on the frequency band of the unlicensed spectrum, where the carrier signal #8 is used by the passive tag to transmit an uplink signal or uplink data.

Specifically, the carrier signal #8 may be a monophonic signal or a continuous wave.

Specifically, the carrier signal #8 may be used by the passive tag to send uplink data to the base station. That the carrier signal #8 may be used by the passive tag to send uplink data to the base station may be understood as that the carrier signal #8 carries uplink data and is sent to the base station, or may be understood as that a new carrier signal generated based on the carrier signal #8 carries uplink data and is sent to the base station, or the like. This is not limited in this application.

In addition, when receiving the signal #2 sent by the relay node, the carrier signal #8 sent by the relay node, or the like, the passive tag may harvest energy of the signal #1.

For example, the relay node may send the carrier signal #8 on the frequency band of 934-954 MHz and the frequency band of 920-925 MHz.

A problem that the passive tag does not support frequency shifting when transmitting uplink data in an FDD system can be resolved by sending, by the relay node, the carrier signal #8 to the passive tag.

Step S1018: The passive tag sends a signal #3 to the base station on the frequency band of the unlicensed spectrum through backscattering by using the carrier signal #8, where the signal #3 includes an uplink signal or uplink data.

Specifically, the signal #3 may be an example of the foregoing second signal.

For example, the passive tag sends the signal #3 on the frequency band of 934-954 MHz and the frequency band of 920-925 MHz.

Correspondingly, power of the signal #3 sent by the passive tag is positively correlated with power of the carrier signal #8 sent by the relay node. That is, higher power of the carrier signal #8 sent by the relay node indicates higher power of the signal #3 sent by the passive tag; and lower power of the carrier signal #8 sent by the relay node indicates lower power of the signal #3 sent by the passive tag.

According to the foregoing method, energy supply to the passive tag in as large a coverage area as possible can be ensured, and transmission of uplink data of the passive tag can be ensured, thereby improving an overall link budget.

It should be noted that an execution sequence of the steps in FIG. 2 to FIG. 10 is not limited in this application.

According to the foregoing method, FIG. 11 is a block diagram of a communication apparatus according to this application. As shown in FIG. 11, the communication apparatus 700 includes a sending unit 710 and a receiving unit 720.

Optionally, the communication apparatus 700 may correspond to the base station in embodiments of this application.

In this case, the units in the communication apparatus 700 are configured to implement the following functions.

The sending unit 710 is configured to send a signal #1 to a passive tag on a downlink frequency band of a licensed FDD spectrum; is configured to send a signal #1 to a passive tag on a downlink frequency band of a licensed FDD spectrum and an uplink frequency band of the licensed FDD spectrum; is configured to send a signal #1 to a passive tag on a downlink frequency band of a licensed FDD spectrum and an unlicensed frequency band; is configured to send a signal #2 to a passive tag on a downlink frequency band of a licensed FDD spectrum or an unlicensed frequency band; is configured to send a signal #2 to a passive tag in a time period #2; is configured to send a carrier signal #1, a carrier signal #2, a carrier signal #3, and a carrier signal #4 to a passive tag on an uplink frequency band of a licensed FDD spectrum or an unlicensed frequency band; or is configured to send indication information #1 to an NR terminal device or CPE.

Specifically, for related descriptions of the sending unit 710 being configured to send the signal #1 to the passive tag on the downlink frequency band of the licensed FDD spectrum, refer to FIG. 2 to FIG. 10; for related descriptions of the sending unit 710 being configured to send the signal #1 to the passive tag on the downlink frequency band of the licensed FDD spectrum and the uplink frequency band of the licensed FDD spectrum or the sending unit 710 being configured to send the signal #1 to the passive tag on the downlink frequency band of the licensed FDD spectrum and the unlicensed frequency band, refer to FIG. 3 to FIG. 10; for related descriptions of the sending unit 710 being configured to send the signal #2 to the passive tag on the downlink frequency band of the licensed FDD spectrum or the unlicensed frequency band, refer to FIG. 3 and FIG. 4; for related descriptions of the sending unit 710 being configured to send the signal #2 to the passive tag in the time period #2, refer to FIG. 5; for related descriptions of the sending unit 710 being configured to send the carrier signal #1, the carrier signal #2, the carrier signal #3, and the carrier signal #4 to the passive tag on the uplink frequency band of the licensed FDD spectrum or the unlicensed frequency band, refer to FIG. 3 to FIG. 6; and for related descriptions of the sending unit 710 being configured to send the indication information #1 to the NR terminal device or the CPE, refer to FIG. 6.

The receiving unit 720 is configured to receive, on the uplink frequency band of the licensed FDD spectrum or the unlicensed frequency band, a signal #3 sent by the passive tag.

Specifically, for related descriptions of the receiving unit 720 being configured to receive, on the uplink frequency band of the licensed FDD spectrum or the unlicensed frequency band, the signal #3 sent by the passive tag, refer to FIG. 2 to FIG. 6.

Optionally, the communication apparatus 700 may further include a processing unit 730. The processing unit 730 is communicatively connected to the sending unit 710 and the receiving unit 720. Optionally, the apparatus 700 further includes a storage, and the storage is communicatively connected to the processing unit 730. Optionally, the processing unit 730, the storage, the sending unit 710, and the receiving unit 720 may be communicatively connected. The storage may be configured to store instructions. The processing unit 730 is configured to execute the instructions stored in the storage, to control the sending unit 710 to send information or a signal and the receiving unit 720 to receive information or a signal.

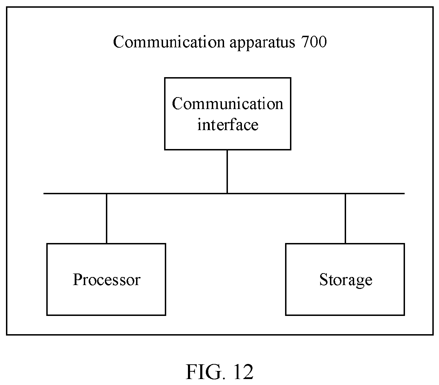

In this embodiment of this application, the apparatus 700 may be a chip (or a chip system) installed in the base station, as shown in FIG. 12. In this case, the apparatus 700 may include a processor and an input/output interface. The processor may be communicatively connected to the sending unit 710 and the receiving unit 720 in the base station through the input/output interface. Optionally, the apparatus further includes a storage, and the storage is communicatively connected to the processor. Optionally, the processor, the storage, and the sending unit 710 and the receiving unit 720 in the base station may be communicatively connected. The storage may be configured to store instructions. The processor is configured to execute the instructions stored in the storage, to control the sending unit 710 to send information or a signal and the receiving unit 720 to receive information or a signal. In this case, a communication interface in the apparatus 700 shown in FIG. 12 may correspond to the input/output interface.

In an implementation of the foregoing units, the sending unit 710 and the receiving unit 720 may alternatively be integrated into one transceiver unit that has both a receiving function and a sending function. This is not limited in this application.

In embodiments in which the communication apparatus 700 corresponds to the base station, the processing unit 730 is configured to perform processing and/or an operation, other than sending and receiving actions, implemented inside the base station. The sending unit 710 is configured to perform a sending action, and the receiving unit 720 is configured to perform a receiving action.

Optionally, the communication apparatus 700 may correspond to the passive tag in embodiments of this application.

In this case, the units in the communication apparatus 700 are configured to implement the following functions.

The sending unit 710 is configured to send a signal #3 to a base station on an uplink frequency band of a licensed FDD spectrum or an unlicensed frequency band.

Specifically, for related descriptions of the sending unit 710 being configured to send the signal #3 to the base station on the uplink frequency band of the licensed FDD spectrum or the unlicensed frequency band, refer to FIG. 2 to FIG. 10.

The receiving unit 720 is configured to receive a signal #1 from the base station on a downlink frequency band of the licensed FDD spectrum; is configured to receive a signal #1 from the base station on a downlink frequency band of the licensed FDD spectrum and the uplink frequency band of the licensed FDD spectrum; is configured to receive a signal #1 from the base station on a downlink frequency band of the licensed FDD spectrum and the unlicensed frequency band; is configured to receive a signal #2 from the base station on a downlink frequency band of the licensed FDD spectrum and the unlicensed frequency band; is configured to receive a signal #2 from the base station in a time period #2; is configured to receive a carrier signal #1, a carrier signal #2, and a carrier signal #3 from the base station on the uplink frequency band of the licensed FDD spectrum or the unlicensed frequency band; or is configured to receive a carrier signal #4 from an NR terminal device or CPE on the uplink frequency band of the licensed FDD spectrum.

Specifically, for related descriptions of the receiving unit 720 being configured to receive the signal #1 from the base station on the downlink frequency band of the licensed FDD spectrum, refer to FIG. 2 to FIG. 6; for related descriptions of the receiving unit 720 being configured to receive the signal #1 from the base station on the downlink frequency band of the licensed FDD spectrum and the uplink frequency band of the licensed FDD spectrum or the receiving unit 720 being configured to receive the signal #1 from the base station on the downlink frequency band of the licensed FDD spectrum and the unlicensed frequency band, refer to FIG. 3 to FIG. 10; for related descriptions of the receiving unit 720 being configured to receive the signal #2 from the base station on the downlink frequency band of the licensed FDD spectrum or the unlicensed frequency band, refer to FIG. 3 and FIG. 4; for related descriptions of the receiving unit 720 being configured to receive the signal #2 from the base station in the time period #2, refer to FIG. 5; for related descriptions of the receiving unit 720 being configured to receive the carrier signal #1, the carrier signal #2, and the carrier signal #3 from the base station on the uplink frequency band of the licensed FDD spectrum or the unlicensed frequency band, refer to FIG. 3 to FIG. 5; and for related descriptions of the receiving unit 720 being configured to receive the carrier signal #4 from the NR terminal device or the CPE, refer to FIG. 6.

Optionally, the communication apparatus 700 may further include a processing unit 730. The processing unit 730 is communicatively connected to the sending unit 710 and the receiving unit 720. Optionally, the apparatus 700 further includes a storage, and the storage is communicatively connected to the processing unit 730. Optionally, the processing unit 730, the storage, the sending unit 710, and the receiving unit 720 may be communicatively connected. The storage may be configured to store instructions. The processing unit 730 is configured to execute the instructions stored in the storage, to control the sending unit 710 to send information or a signal and the receiving unit 720 to receive information or a signal.

In this embodiment of this application, the apparatus 700 may be a chip (or a chip system) installed in the passive tag, as shown in FIG. 12. In this case, the apparatus 700 may include a processor and an input/output interface. The processor may be communicatively connected to the sending unit 710 and the receiving unit 720 in the passive tag through the input/output interface. Optionally, the apparatus further includes a storage, and the storage is communicatively connected to the processor. Optionally, the processor, the storage, and the sending unit 710 and the receiving unit 720 in the passive tag may be communicatively connected. The storage may be configured to store instructions. The processor is configured to execute the instructions stored in the storage, to control the sending unit 710 to send information or a signal and the receiving unit 720 to receive information or a signal. In this case, a communication interface in the apparatus 700 shown in FIG. 12 may correspond to the input/output interface.

In an implementation of the foregoing units, the sending unit 710 and the receiving unit 720 may alternatively be integrated into one transceiver unit that has both a receiving function and a sending function. This is not limited in this application.

In embodiments in which the communication apparatus 700 corresponds to the passive tag, the processing unit 730 is configured to perform processing and/or an operation, other than sending and receiving actions, implemented inside the passive tag. The sending unit 710 is configured to perform a sending action, and the receiving unit 720 is configured to perform a receiving action.

Optionally, the communication apparatus 700 may correspond to the NR terminal device or the CPE in embodiments of this application.

In this case, the units in the communication apparatus 700 are configured to implement the following functions.

The sending unit 710 is configured to send a carrier signal #4 to a passive tag on an uplink frequency band of a licensed FDD spectrum; is configured to send a signal #2 to a passive tag on an uplink frequency band of a licensed FDD spectrum; is configured to send a signal #2 to a passive tag on an unlicensed frequency band; is configured to send a carrier signal #5 to a passive tag on an uplink frequency band of a licensed FDD spectrum; is configured to send a carrier signal #6 to a passive tag on an uplink frequency band of a licensed FDD spectrum; is configured to send a carrier signal #7 to a passive tag on an unlicensed frequency band; or is configured to send a carrier signal #8 to a passive tag on an unlicensed frequency band.

Specifically, for related descriptions of the sending unit 710 being configured to send the carrier signal #4 to the passive tag on the uplink frequency band of the licensed FDD spectrum, refer to FIG. 6; for related descriptions of the sending unit 710 being configured to send the signal #2 to the passive tag on the uplink frequency band of the licensed FDD spectrum, refer to FIG. 7 and FIG. 8; for related descriptions of the sending unit 710 being configured to send the signal #2 to the passive tag on the unlicensed frequency band, refer to FIG. 9 and FIG. 10; for related descriptions of the sending unit 710 being configured to send the carrier signal #5 to the passive tag on the uplink frequency band of the licensed FDD spectrum, refer to FIG. 7; for related descriptions of the sending unit 710 being configured to send the carrier signal #6 to the passive tag on the uplink frequency band of the licensed FDD spectrum, refer to FIG. 8; for related descriptions of the sending unit 710 being configured to send the carrier signal #7 to the passive tag on the uplink frequency band of the licensed FDD spectrum, refer to FIG. 9; and for related descriptions of the sending unit 710 being configured to send the carrier signal #8 to the passive tag on the uplink frequency band of the licensed FDD spectrum, refer to FIG. 10.

The receiving unit 720 is configured to receive indication information #1 from a base station; or is configured to receive a signal #3 from the passive tag.

Specifically, for related descriptions of the receiving unit 720 being configured to receive the indication information #1 from the base station, refer to FIG. 6; and for related descriptions of the receiving unit 720 being configured to receive the signal #3 from the passive tag, refer to FIG. 7 to FIG. 10.

Optionally, the communication apparatus 700 may further include a processing unit 730. The processing unit 730 is communicatively connected to the sending unit 710 and the receiving unit 720. Optionally, the apparatus 700 further includes a storage, and the storage is communicatively connected to the processing unit 730. Optionally, the processing unit 730, the storage, the sending unit 710, and the receiving unit 720 may be communicatively connected. The storage may be configured to store instructions. The processing unit 730 is configured to execute the instructions stored in the storage, to control the sending unit 710 to send information or a signal and the receiving unit 720 to receive information or a signal.

In this embodiment of this application, the apparatus 700 may be a chip (or a chip system) installed in the NR terminal device or the CPE, as shown in FIG. 12. In this case, the apparatus 700 may include a processor and an input/output interface. The processor may be communicatively connected to the sending unit 710 and the receiving unit 720 in the NR terminal device or the CPE through the input/output interface. Optionally, the apparatus further includes a storage, and the storage is communicatively connected to the processor. Optionally, the processor, the storage, and the sending unit 710 and the receiving unit 720 in the NR terminal device or the CPE may be communicatively connected. The storage may be configured to store instructions. The processor is configured to execute the instructions stored in the storage, to control the sending unit 710 to send information or a signal and the receiving unit 720 to receive information or a signal. In this case, a communication interface in the apparatus 700 shown in FIG. 12 may correspond to the input/output interface.

In an implementation of the foregoing units, the sending unit 710 and the receiving unit 720 may alternatively be integrated into one transceiver unit that has both a receiving function and a sending function. This is not limited in this application.

In embodiments in which the communication apparatus 700 corresponds to the NR terminal device or the CPE, the processing unit 730 is configured to perform processing and/or an operation, other than sending and receiving actions, implemented inside the NR terminal device or the CPE. The sending unit 710 is configured to perform a sending action, and the receiving unit 720 is configured to perform a receiving action.

A person of ordinary skill in the art may be aware that the example units, algorithms, and steps described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for convenient and brief description, for detailed working processes of the system, apparatus, and unit described above, refer to the corresponding processes in the foregoing method embodiments. Details are not described herein again.

In the several embodiments provided in this application, it should be understood that the disclosed system, apparatus, and method may be implemented in other manners. For example, the apparatus embodiment described above is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
Sending (S210), by a network device (170), a first signal to a first device on a first frequency band, wherein the first frequency band comprises a downlink frequency band of a licensed frequency division duplex , FDD , spectrum, and the first signal is used to supply energy to the first device; and
Receiving, by the network device, a second signal from the first device on a second frequency band or a third frequency band, wherein the second signal comprises uplink data, the second frequency band comprises an uplink frequency band of the licensed frequency division duplex FDD spectrum, and the third frequency band comprises a frequency band of an unlicensed spectrum.

2. The method according to claim 1, wherein the sending, by a network device, a first signal to a first device on a first frequency band comprises:
Sending (S510), by the network device, the first signal to the first device in a first time period of the first frequency band and the second frequency band, or sending, by the network device, the first signal to the first device in a second time period of the first frequency band and the third frequency band.

3. The method according to claim 1 or 2, wherein the receiving, by the network device, a second signal from the first device on a second frequency band or a third frequency band comprises:
sending, by the network device, first indication information to a second device, wherein the first indication information indicates the second device to send a first carrier signal to the first device on the second frequency band, and the first carrier signal is used by the first device to send the second signal to the network device; and
receiving, by the network device, the second signal from the first device on the second frequency band.

4. The method according to claim 1 or 2, wherein the receiving, by the network device, a second signal from the first device on a second frequency band or a third frequency band comprises:
sending, by the network device, second indication information to a third device, wherein the second indication information indicates the third device to send a third carrier signal to the first device on the second frequency band or the third frequency band, and the third carrier signal is used by the first device to send the second signal to the network device; and
receiving, by the network device, the second signal from the first device on the second frequency band or the third frequency band.

5. The method according to claim 1 or 2, wherein the receiving, by the network device, a second signal from the first device on a second frequency band or a third frequency band comprises:
sending, by the network device, a second carrier signal to the first device on the second frequency band or the third frequency band, wherein the second carrier signal is used by the first device to send the second signal to the network device; and
receiving, by the network device, the second signal from the first device on the second frequency band or the third frequency band.

6. The method according to any one of claims 1 to 5, wherein the method further comprises:
sending, by the network device, a third signal to the first device on the first frequency band or the third frequency band, wherein the third signal is used to request the first device to send the second signal.

7. A communication method, wherein the method comprises:
receiving, by a first device, a first signal from a network device on a first frequency band, wherein the first frequency band comprises a downlink frequency band of a licensed frequency division duplex, FDD, spectrum, and the first signal is used to supply energy to the first device; and
sending, by the first device, a second signal to the network device on a second frequency band or a third frequency band, wherein the second signal comprises uplink data, the second frequency band comprises an uplink frequency band of the licensed frequency division duplex FDD spectrum, and the third frequency band comprises a frequency band of an unlicensed spectrum.

8. The method according to claim 7, wherein the receiving, by a first device, a first signal from a network device on a first frequency band comprises:
receiving, by the first device, the first signal from the network device in a first time period of the first frequency band and the second frequency band, or receiving, by the first device, the first signal from the network device in a second time period of the first frequency band and the third frequency band.

9. The method according to claim 7 or 8, wherein the method further comprises:
receiving, by the first device, a first carrier signal from a second device on the second frequency band, wherein the first carrier signal is used by the first device to send the second signal to the network device.

10. The method according to claim 7 or 8, wherein the method further comprises:
receiving, by the first device, a third carrier signal from a third device on the second frequency band or the third frequency band, wherein the third carrier signal is used by the first device to send the second signal to the network device on the second frequency band or the third frequency band.

11. The method according to claim 7 or 8, wherein the sending, by the first device, a second signal to the network device on a second frequency band or a third frequency band comprises:
receiving, by the first device, a second carrier signal from the network device on the second frequency band or the third frequency band, wherein the second carrier signal is used by the first device to send the second signal to the network device.

12. The method according to any one of claims 7 to 11, wherein the method further comprises:
receiving, by the first device, a third signal from the network device on the first frequency band or the third frequency band, wherein the third signal is used to request the first device to send the second signal.

13. A communication apparatus, comprising:
a processor, wherein the processor is coupled to a storage, the storage is configured to store a program or instructions, and when the program or the instructions are executed by the processor, the apparatus is enabled to perform the communication method according to any one of claims 1 to 6.

14. A communication apparatus, comprising:
a processor, wherein the processor is coupled to a storage, the storage is configured to store a program or instructions, and when the program or the instructions are executed by the processor, the apparatus is enabled to perform the communication method according to any one of claims 7 to 12.

15. A communication system, comprising a network device and a first device, wherein the network device is configured to perform the method according to any one of claims 1 to 6, and the first device is configured to perform the method according to any one of claims 7 to 12.

## Patentansprüche

1. Kommunikationsverfahren, wobei das Verfahren umfasst:
Senden (S210) eines ersten Signals von einer Netzwerkvorrichtung (170) auf einem ersten Frequenzband an eine erste Vorrichtung, wobei das erste Frequenzband ein Downlink-Frequenzband eines lizenzierten Frequenzduplex-Spektrums, FDD-Spektrums, umfasst und wobei das erste Signal verwendet wird, um die erste Vorrichtung mit Energie zu versorgen; und
Empfangen, in der Netzwerkvorrichtung, eines zweiten Signals von der ersten Vorrichtung auf einem zweiten Frequenzband oder einem dritten Frequenzband, wobei das zweite Signal Uplink-Daten umfasst, wobei das zweite Frequenzband ein Uplink-Frequenzband des lizenzierten Frequenzduplex-Spektrums, FDD-Spektrums, umfasst und wobei das dritte Frequenzband ein Frequenzband eines nicht-lizenzierten Spektrums umfasst.

2. Verfahren nach Anspruch 1, wobei das Senden eines ersten Signals von einer Netzwerkvorrichtung an eine erste Vorrichtung auf einem ersten Frequenzband umfasst:
Senden (S510) des ersten Signals von der Netzwerkvorrichtung an die erste Vorrichtung in einem ersten Zeitraum des ersten Frequenzbandes und des zweiten Frequenzbandes oder Senden des ersten Signals von der Netzwerkvorrichtung an die erste Vorrichtung in einem zweiten Zeitraum des ersten Frequenzbandes und des dritten Frequenzbandes.

3. Verfahren nach Anspruch 1 oder 2, wobei das Empfangen, in der Netzwerkvorrichtung, eines zweiten Signals von der ersten Vorrichtung auf einem zweiten Frequenzband oder einem dritten Frequenzband umfasst:
Senden von ersten Anzeigeinformationen von der Netzwerkvorrichtung an eine zweite Vorrichtung, wobei die ersten Anzeigeinformationen die zweite Vorrichtung anweisen, ein erstes Trägersignal auf dem zweiten Frequenzband an die erste Vorrichtung zu senden, und wobei das erste Trägersignal von der ersten Vorrichtung verwendet wird, um das zweite Signal an die Netzwerkvorrichtung zu senden; und
Empfangen, in der Netzwerkvorrichtung, des zweiten Signals von der ersten Vorrichtung auf dem zweiten Frequenzband.

4. Verfahren nach Anspruch 1 oder 2, wobei das Empfangen, in der Netzwerkvorrichtung, eines zweiten Signals von der ersten Vorrichtung auf einem zweiten Frequenzband oder einem dritten Frequenzband umfasst:
Senden von zweiten Anzeigeinformationen von der Netzwerkvorrichtung an eine dritte Vorrichtung, wobei die zweiten Anzeigeinformationen die dritte Vorrichtung anweisen, ein drittes Trägersignal auf dem zweiten Frequenzband oder dem dritten Frequenzband an die erste Vorrichtung zu senden, und wobei das dritte Trägersignal von der ersten Vorrichtung verwendet wird, um das zweite Signal an die Netzwerkvorrichtung zu senden; und
Empfangen, in der Netzwerkvorrichtung, des zweiten Signals von der ersten Vorrichtung auf dem zweiten Frequenzband oder dem dritten Frequenzband.

5. Verfahren nach Anspruch 1 oder 2, wobei das Empfangen, in der Netzwerkvorrichtung, eines zweiten Signals von der ersten Vorrichtung auf einem zweiten Frequenzband oder einem dritten Frequenzband umfasst:
Senden eines zweiten Trägersignals von der Netzwerkvorrichtung auf dem zweiten Frequenzband oder dem dritten Frequenzband an die erste Vorrichtung, und wobei das zweite Trägersignal von der ersten Vorrichtung verwendet wird, um das zweite Signal an die Netzwerkvorrichtung zu senden; und
Empfangen, in der Netzwerkvorrichtung, des zweiten Signals von der ersten Vorrichtung auf dem zweiten Frequenzband oder dem dritten Frequenzband.

6. Verfahren nach einem der Ansprüche 1 bis 5, wobei das Verfahren ferner umfasst:
Senden eines dritten Signals von der Netzwerkvorrichtung auf dem zweiten Frequenzband oder dem dritten Frequenzband an die erste Vorrichtung, und wobei das dritte Signal verwendet wird, um die erste Vorrichtung aufzufordern, das zweite Signal zu senden.

7. Kommunikationsverfahren, wobei das Verfahren umfasst:
Empfangen, in einer ersten Vorrichtung, eines ersten Signals von einer Netzwerkvorrichtung auf einem ersten Frequenzband, wobei das erste Frequenzband ein Downlink-Frequenzband eines lizenzierten Frequenzduplex-Spektrums, FDD-Spektrums, umfasst und wobei das erste Signal verwendet wird, um die erste Vorrichtung mit Energie zu versorgen; und
Senden eines zweiten Signals von der ersten Vorrichtung an die Netzwerkvorrichtung auf einem zweiten Frequenzband oder einem dritten Frequenzband, wobei das zweite Signal Uplink-Daten umfasst, wobei das zweite Frequenzband ein Uplink-Frequenzband des lizenzierten Frequenzduplex-Spektrums, FDD-Spektrums, umfasst und wobei das dritte Frequenzband ein Frequenzband eines nicht-lizenzierten Spektrums umfasst.

8. Verfahren nach Anspruch 7, wobei das Empfangen, in einer ersten Vorrichtung, eines ersten Signals von einer Netzwerkvorrichtung auf einem ersten Frequenzband umfasst:
Empfangen, in der ersten Vorrichtung, des ersten Signals von der Netzwerkvorrichtung in einem ersten Zeitraum des ersten Frequenzbandes und des zweiten Frequenzbandes oder Empfangen, in der ersten Vorrichtung, des ersten Signals von der Netzwerkvorrichtung in einem zweiten Zeitraum des ersten Frequenzbandes und des dritten Frequenzbandes.

9. Verfahren nach Anspruch 7 oder 8, wobei das Verfahren ferner umfasst:
Empfangen, in der ersten Vorrichtung, eines ersten Trägersignals von einer zweiten Vorrichtung auf dem zweiten Frequenzband, wobei das erste Trägersignal von der ersten Vorrichtung verwendet wird, um das zweite Signal an die Netzwerkvorrichtung zu senden.

10. Verfahren nach Anspruch 7 oder 8, wobei das Verfahren ferner umfasst:
Empfangen, in der ersten Vorrichtung, eines dritten Trägersignals von einer dritten Vorrichtung auf dem zweiten Frequenzband oder dem dritten Frequenzband, wobei das dritte Trägersignal von der ersten Vorrichtung verwendet wird, um das zweite Signal auf dem zweiten Frequenzband oder dem dritten Frequenzband an die Netzwerkvorrichtung zu senden.

11. Verfahren nach Anspruch 7 oder 8, wobei das Senden eines zweiten Signals von der ersten Vorrichtung auf einem zweiten Frequenzband oder einem dritten Frequenzband an die Netzwerkvorrichtung umfasst:
Empfangen, in der ersten Vorrichtung, eines zweiten Trägersignals von der Netzwerkvorrichtung auf dem zweiten Frequenzband oder dem dritten Frequenzband, wobei das zweite Trägersignal von der ersten Vorrichtung verwendet wird, um das zweite Signal an die Netzwerkvorrichtung zu senden.

12. Verfahren nach einem der Ansprüche 7 bis 11, wobei das Verfahren ferner umfasst:
Empfangen, in der ersten Vorrichtung, eines dritten Signals von der Netzwerkvorrichtung auf dem ersten Frequenzband oder dem dritten Frequenzband, wobei das dritte Signal verwendet wird, um die erste Vorrichtung aufzufordern, das zweite Signal zu senden.

13. Kommunikationseinrichtung, umfassend:
einen Prozessor, wobei der Prozessor mit einem Speicher gekoppelt ist, wobei der Speicher konfiguriert ist, um ein Programm oder Anweisungen zu speichern; und wobei, wenn das Programm oder die Anweisungen von dem Prozessor ausgeführt werden, die Einrichtung aktiviert wird, um das Verfahren nach einem der Ansprüche 1 bis 6 durchzuführen.

14. Kommunikationseinrichtung, umfassend:
einen Prozessor, wobei der Prozessor mit einem Speicher gekoppelt ist, wobei der Speicher konfiguriert ist, um ein Programm oder Anweisungen zu speichern; und wobei, wenn das Programm oder die Anweisungen von dem Prozessor ausgeführt werden, die Einrichtung aktiviert wird, um das Verfahren nach einem der Ansprüche 7 bis 12 durchzuführen.

15. Kommunikationssystem, das eine Netzwerkvorrichtung und eine erste Vorrichtung umfasst, wobei die Netzwerkvorrichtung konfiguriert ist, um das Verfahren nach einem der Ansprüche 1 bis 6 durchzuführen, und wobei die erste Vorrichtung konfiguriert ist, um das Verfahren nach einem der Ansprüche 7 bis 12 durchzuführen.

## Revendications

1. Procédé de communication, le procédé comprenant :
l'envoi (S210), par un dispositif réseau (170), d'un premier signal à un premier dispositif sur une première bande de fréquence, la première bande de fréquence comprenant une bande de fréquence de liaison descendante d'un spectre duplex à répartition en fréquence, FDD, sous licence et le premier signal étant utilisé pour fournir de la puissance au premier dispositif ; et
la réception, par le dispositif réseau, d'un deuxième signal en provenance du premier dispositif sur une deuxième bande de fréquence ou une troisième bande de fréquence, le deuxième signal comprenant des données de liaison montante, la deuxième bande de fréquence comprenant une bande de fréquence de liaison montante du spectre duplex par répartition de fréquence FDD sous licence, et la troisième bande de fréquence comprenant une bande de fréquence d'un spectre sans licence.

2. Procédé selon la revendication 1, dans lequel l'envoi, par un dispositif réseau, d'un premier signal à un premier dispositif sur une première bande de fréquence comprend :
l'envoi (S510), par le dispositif réseau, du premier signal au premier dispositif dans une première période de temps de la première bande de fréquence et de la deuxième bande de fréquence, ou l'envoi, par le dispositif réseau, du premier signal au premier dispositif dans une deuxième période de temps de la première bande de fréquence et de la troisième bande de fréquence.

3. Procédé selon la revendication 1 ou 2, dans lequel la réception, par le dispositif réseau, d'un deuxième signal en provenance du premier dispositif sur une deuxième bande de fréquence ou une troisième bande de fréquence comprend :
l'envoi, par le dispositif réseau, d'une première information d'indication à un deuxième dispositif, la première information d'indication indiquant au deuxième dispositif d'envoyer un premier signal de porteuse au premier dispositif sur la deuxième bande de fréquence, et le premier signal de porteuse étant utilisé par le premier dispositif pour envoyer le deuxième signal au dispositif réseau ; et
la réception, par le dispositif réseau, du deuxième signal en provenance du premier dispositif sur la deuxième bande de fréquence.

4. Procédé selon la revendication 1 ou 2, dans lequel la réception, par le dispositif réseau, d'un deuxième signal en provenance du premier dispositif sur une deuxième bande de fréquence ou une troisième bande de fréquence comprend :
l'envoi, par le dispositif réseau, de deuxièmes informations d'indication à un troisième dispositif, les deuxièmes informations d'indication indiquant au troisième dispositif d'envoyer un troisième signal de porteuse au premier dispositif sur la deuxième bande de fréquence ou la troisième bande de fréquence, et le troisième signal de porteuse étant utilisé par le premier dispositif pour envoyer le deuxième signal au dispositif réseau ; et
la réception, par le dispositif réseau, du deuxième signal en provenance du premier dispositif sur la deuxième bande de fréquence ou la troisième bande de fréquence.

5. Procédé selon la revendication 1 ou 2, dans lequel la réception, par le dispositif réseau, d'un deuxième signal en provenance du premier dispositif sur une deuxième bande de fréquence ou une troisième bande de fréquence comprend :
l'envoi, par le dispositif réseau, d'un deuxième signal de porteuse au premier dispositif sur la deuxième bande de fréquence ou la troisième bande de fréquence, le deuxième signal de porteuse étant utilisé par le premier dispositif pour envoyer le deuxième signal au dispositif réseau ; et
la réception, par le dispositif réseau, du deuxième signal en provenance du premier dispositif sur la deuxième bande de fréquence ou la troisième bande de fréquence.

6. Procédé selon l'une quelconque des revendications 1 à 5, dans lequel le procédé comprend en outre :
l'envoi, par le dispositif réseau, d'un troisième signal au premier dispositif sur la première bande de fréquence ou la troisième bande de fréquence, le troisième signal étant utilisé pour demander au premier dispositif d'envoyer le deuxième signal.

7. Procédé de communication, le procédé comprenant :
la réception, par un premier dispositif, d'un premier signal en provenance d'un dispositif réseau sur une première bande de fréquence, la première bande de fréquence comprenant une bande de fréquence de liaison descendante d'un spectre duplex à répartition de fréquence, FDD, sous licence, et le premier signal étant utilisé pour fournir de la puissance au premier dispositif ; et
l'envoi, par le premier dispositif, d'un deuxième signal au dispositif réseau sur une deuxième bande de fréquence ou une troisième bande de fréquence, le deuxième signal comprenant des données de liaison montante, la deuxième bande de fréquence comprenant une bande de fréquence de liaison montante du spectre de duplex par répartition de fréquence FDD sous licence, et la troisième bande de fréquence comprenant une bande de fréquence d'un spectre sans licence.

8. Procédé selon la revendication 7, dans lequel la réception, par un premier dispositif, d'un premier signal en provenance d'un dispositif réseau sur une première bande de fréquence comprend :
la réception, par le premier dispositif, du premier signal en provenance du dispositif réseau dans une première période de temps de la première bande de fréquence et de la deuxième bande de fréquence, ou la réception, par le premier dispositif, du premier signal en provenance du dispositif réseau dans une deuxième période de temps de la première bande de fréquence et de la troisième bande de fréquence.

9. Procédé selon la revendication 7 ou 8, dans lequel le procédé comprend en outre :
la réception, par le premier dispositif, d'un premier signal de porteuse en provenance d'un deuxième dispositif sur la deuxième bande de fréquence, le premier signal de porteuse étant utilisé par le premier dispositif pour envoyer le deuxième signal au dispositif réseau.

10. Procédé selon la revendication 7 ou 8, dans lequel le procédé comprend en outre :
la réception, par le premier dispositif, d'un troisième signal de porteuse en provenance d'un troisième dispositif sur la deuxième bande de fréquence ou la troisième bande de fréquence, le troisième signal de porteuse étant utilisé par le premier dispositif pour envoyer le deuxième signal au dispositif réseau sur la deuxième bande de fréquence ou la troisième bande de fréquence.

11. Procédé selon la revendication 7 ou 8, dans lequel l'envoi, par le premier dispositif, d'un deuxième signal au dispositif réseau sur une deuxième bande de fréquence ou une troisième bande de fréquence comprend :
la réception, par le premier dispositif, d'un deuxième signal de porteuse en provenance du dispositif réseau sur la deuxième bande de fréquence ou la troisième bande de fréquence, le deuxième signal de porteuse étant utilisé par le premier dispositif pour envoyer le deuxième signal au dispositif réseau.

12. Procédé selon l'une quelconque des revendications 7 à 11, dans lequel le procédé comprend en outre :
la réception, par le premier dispositif, d'un troisième signal en provenance du dispositif réseau sur la première bande de fréquence ou la troisième bande de fréquence, le troisième signal étant utilisé pour demander au premier dispositif d'envoyer le deuxième signal.

13. Appareil de communication comprenant :
un processeur, le processeur étant couplé à un stockage, et le stockage étant configuré pour stocker un programme ou des instructions et, lorsque le programme ou les instructions sont exécutées par le processeur, l'appareil peut réaliser le procédé de communication selon l'une quelconque des revendications 1 à 6.

14. Appareil de communication comprenant :
un processeur, le processeur étant couplé à un stockage, et le stockage étant configuré pour stocker un programme ou des instructions et, lorsque le programme ou les instructions sont exécutées par le processeur, l'appareil peut réaliser le procédé de communication selon l'une quelconque des revendications 7 à 12.

15. Système de communication, comprenant un un dispositif réseau et un premier dispositif, le dispositif réseau étant configuré pour réaliser le procédé selon l'une quelconque des revendications 1 à 6, et le premier dispositif étant configuré pour réaliser le procédé selon l'une quelconque des revendications 7 à 12.
